(19) Europäisches Patentamt / European Patent Office / Office européen des brevets

(11) **EP 2 517 365 B1**

(12) **FASCICULE DE BREVET EUROPEEN**

(45) Date de publication et mention
de la délivrance du brevet:
**07.08.2019 Bulletin 2019/32**

(21) Numéro de dépôt: **10809016.8**

(22) Date de dépôt: **14.12.2010**

(51) Int Cl.:
***H04B 3/54*** *(2006.01)*

(86) Numéro de dépôt international:
**PCT/FR2010/052727**

(87) Numéro de publication internationale:
**WO 2011/083238 (14.07.2011 Gazette 2011/28)**

(54) **PROCEDE DE SELECTION D'UN MODE DE TRANSMISSION**

VERFAHREN ZUR AUSWAHL EINES ÜBERTRAGUNGSMODUS

METHOD FOR SELECTING A TRANSMISSION MODE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2009 FR 0959407**

(43) Date de publication de la demande:
**31.10.2012 Bulletin 2012/44**

(73) Titulaire: **Orange
75015 Paris (FR)**

(72) Inventeurs:
• **ULMER-MOLL, Anne-Marie
F-35700 Rennes (FR)**
• **SIAUD, Isabelle
F-35000 Rennes (FR)**

(56) Documents cités:
**EP-A1- 2 028 769    US-A1- 2009 262 850
US-B1- 7 269 403**

**Description**

**Domaine de l'invention**

La présente invention se rapporte au domaine des télécommunications. Au sein de ce domaine, l'invention se rapporte plus particulièrement aux communications dites numériques. Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal. A titre d'exemple, les systèmes filaires peuvent avoir une interface de transmission de type CPL (Courant Porteur en Ligne ou PLT (Power Line Transmission)) avec un canal de transmission filaire qui emprunte le réseau électrique ou une interface de transmission optique avec un canal de transmission qui peut aussi bien être filaire (fibre optique) qu'aérien en sortie d'une diode par exemple. Les systèmes sans fil ont une interface dite de transmission RF lorsqu'il s'agit d'un système de télécommunication avec une transmission aérienne d'un signal appartenant à une bande radio (par exemple, de type GSM, UMTS, 802.11x, 802.16e).

**Art antérieur**

Les systèmes de télécommunication sont généralement structurés selon une architecture qui répond à une organisation en couches selon le modèle de communication OSI, normalisé par l'ISO (International Organization for Standardization selon la terminologie anglosaxonne).

Le modèle de communication OSI définit la gestion de service de transmission de données au moyen de sept couches protocolaires superposées : la couche physique (couche 1), la couche liaison de données (couche 2), la couche réseau (couche 3), la couche transport (couche 4), la couche session (couche 5), la couche présentation (couche 6) et la couche application (couche 7).

Les trois premières couches 1, 2 et 3, dites couches basses, sont relatives à la mise en oeuvre de la connexion et au transport des données. Les quatre couches suivantes, dites couches hautes, sont responsables du traitement des données. Cette organisation permet donc au système de télécommunication d'implémenter le service associé aux données traitées.

Les protocoles de liaison de données répondent aux demandes de services provenant de la couche réseau et réalisent leur fonction par l'envoi de demandes de services à la couche physique.

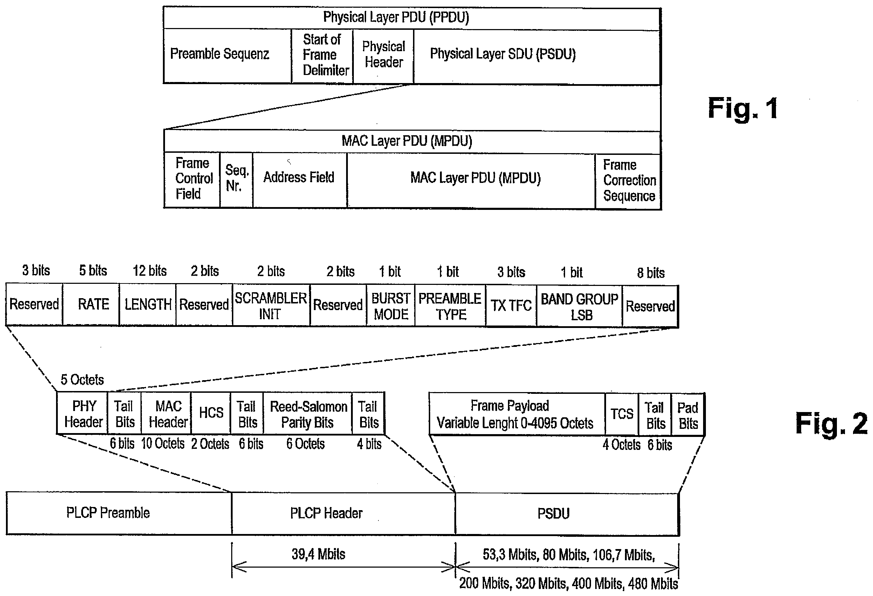

Les échanges de signalisation entre deux entités de communication séparées par un canal de transmission sont pilotés au niveau de la couche liaison de données au moyen d'une structure de trames, dites trames MAC (pour "Medium Access Control" en anglais). En référence à la figure 1, les trames MAC sont encapsulées dans une structure de trames, dite trames physiques par la couche physique PHY avant leur transmission par le canal de transmission.

La figure 2 est un exemple de la composition d'une trame physique (structure du PPDU) dans le cas du mode MAC trame unique du standard ECMA-368 défini dans le document "High Rate Ultra Wideband PHY and MAC Standard", 3rd Edition - December 2008". La couche 1 dite couche PHY est composée de deux sous-couches protocoles : une couche dite PLCP (Physical Layer Convergence Protocol) et une couche dite PMD (Physical Medium Dependant). La couche PLCP assure la synchronisation trame et alloue un ou plusieurs canaux logiques (MSDU : MAC Service Data Unit), issus de la couche MAC, au niveau de la trame PHY. La couche PMD (Physical Medium Dependant) assure la génération du champ de données (frame payload). Ces deux couches donnent lieu à une unité de transmission transmise au niveau couche PHY appelée PPDU. L'unité PPDU comprend un préambule (PLCP preamble), un entête (PLCP Header) et une unité PSDU.

Les systèmes de télécommunication s'orientent aujourd'hui vers une flexibilité du mécanisme de transmission PHY/MAC dans le but de délivrer un débit donné D à une distance émetteur-récepteur d avec la garantie d'une qualité de service QoS (selon la terminologie anglosaxonne Quality of Service) décrite au niveau de la couche PHY par un TEB (Taux d'Erreur Binaire) cible (TEBc) optimale. Ces systèmes flexibles comprennent une ou plusieurs interfaces de transmission.

Une interface de transmission comprend la couche physique PHY qui englobe un ou plusieurs modes de transmission et les protocoles de transmission propres (MAC) pour mettre en oeuvre ces modes de transmission.

Nous désignons par mode de transmission dans la suite du document une technique de transmission (OFDM, technique MIMO (mapping spatial, Spatial Division Multiplex, etc), étalement, etc.) associée à un schéma de codage correcteur d'erreur (codage binaire à signal CBS) et de modulation numérique, schéma désigné par MCS (Modulation and Coding Scheme, typiquement 16-QAM 1/3, 64-QAM ¾, etc) ainsi qu'à une taille de bande de transmission Bw et à une fréquence porteuse de transmission (optique, RF, etc, éventuellement de valeur nulle) permettant de générer le signal dans une bande du spectre dédiée à sa transmission (bande de base, bande radio, bande infrarouge, bande optique) délivrant un débit D.

Le débit D est calculé sur le champ de données, usuellement désigné selon la terminologie anglosaxonne par data payload ou frame payload, intégré dans une unité PSDU (Physical Service Data Unit) et il ne tient pas compte du format de trame au niveau de la couche MAC.

Ainsi, pour délivrer un certain débit D avec une QoS et une distance d, il est possible de sélectionner un mode de transmission parmi plusieurs pour une même entité de communication d'un système de télécommunication dit « flexible ».

Une entité de communication peut aussi bien être un terminal mobile ou fixe qu'un point d'accès (de tout type) d'un réseau d'accès.

La sélection porte donc sur le mode de transmission le plus adapté pour garantir un débit D et une QoS à une distance d.

Le préambule de l'unité PPDU est dédié à la synchronisation trame et à d'autres fonctions. Il est formé d'une séquence pour la synchronisation entre les deux entités de communication qui veulent communiquer et est propre au protocole de la couche MAC. Dans le cas d'un système de type ECMA-368 dit Wi-Media/ECMA-368, le préambule comprend en outre des symboles OFDM dédiés à l'estimation du canal de propagation.

L'entête PHY Header ou PLCP Header de l'unité PPDU donne les caractéristiques du mode de transmission associé à l'interface de transmission j considérée, des informations concernant la taille du champ de données frame payload dans le PSDU, le mode de transmission MAC (fragmentation du champ de données en sous-trames (mode burst) ou non), l'ordonnancement de ces sous-trames, des informations associées à la liaison (distance émetteur-récepteur, puissance rayonnée, etc) et d'autres caractéristiques. Ces données transmises sont protégées à l'aide de codes (Reed Solomon dans le cas d'un système ECMA-368). Les tail bits et pad bits sont utilisés pour réinitialiser le codeur spécifié dans le PLCP header.

L'unité PSDU (Physical Service Data Unit) contient en particulier les informations à transmettre (frame payload) qui sont associées à un ou plusieurs modes de transmission de l'interface de transmission j. L'unité PSDU correspond au champ de données, il peut être formé d'un ou plusieurs MSDU ou bien d'une fragmentation de ceux-ci.

Dans le cas d'une unité PSDU formée d'un MSDU, l'unité PSDU contient en particulier les informations à transmettre au débit D pour un mode de transmission donné et le protocole MPDU (MAC Protocol Data Unit) au niveau couche MAC contrôle la synchronisation la transmission de la trame PHY formée d'un MSDU.

Dans le cas d'une unité PSDU formée de plusieurs MSDU, ceux-ci sont fragmentés dans des sous-trames. Dans ce cas, le mode de transmission MAC est dit par burst. La couche MAC ne contrôle que la première trame (dite de synchronisation), les autres trames sont contrôlées au niveau couche PHY. Des champs supplémentaires sont ajoutés à la fois dans le PLCP header et dans le PSDU pour procéder à la gestion de cette fragmentation des MSDU et de leur répartition dans plusieurs sous-trames. Ces différents MSDU peuvent comprendre plusieurs modes de transmission de l'interface de transmission j. La trame construite est dite super-trame.

L'unité PSDU peut être complétée par une séquence dite de Frame Check Sequence (FCS)et par des bits (tail bits) pour assurer une réinitialisation du codeur de canal (associé au mode de transmission). Les pads bits assurent une taille de trame compatible au format de trame MAC.

Les exemples suivants d'entités de communication peuvent être qualifiées de flexibles ; elles comprennent une ou plusieurs interfaces de transmission associées respectivement à un ou plusieurs modes de transmission.

Le premier exemple concerne une entité de communication qui comprend des interfaces de transmission compatibles respectivement d'un système IEEE802.11n MIMO, d'un système UWB-OFDM SISO (Wi-Media/ECMA-368) et d'un système UWB-OFDM à 60 GHz avec des modes de transmission qui permettent d'obtenir un même débit cible donné ici à environ 3% près assorti d'une limite supérieure d'environ 8% en valeur maximale permettant de sélectionner différents modes de transmission.

Un système IEEE802.11n MIMO défini dans le document "IEEE P802.11n™/D4.01Draft STANDARD for Information Technology-Telecommunications and information exchange between systems-Local and metropolitan area networks-Specific requirements-Part 11: Wireless LAN Medium Access Control (MAC) and Physical Layer (PHY) specifications:Amendment 5(# 933,6171): Enhancements for Higher Throughput, May 2008", avec une configuration MIMO à quatre flux spatiaux permet d'atteindre un débit de 540 Mbit/s (annexe 1, paragraphe 4.1 du document IEEE) sur le champ de données (PSDU).

Un système UWB-OFDM de type SISO défini dans le standard Wi-Media/ECMA-368 permet d'atteindre un débit compris entre 53 Mbit/s et 480 Mbit/s.

Un système UWB-OFDM à 60 GHz (par exemple un système dérivé du standard ECMA-368 transposé à 60 GHz assorti de modulations numériques à plus grand nombre d'états et d'un élargissement de la bande de transmission tel que décrit dans le document "Deliverable D2.5, October 2009" accessible à l'adresse Internet http://www.ict-omega.eu/publications/deliverables.html du projet européen ICT OMEGA) ou par exemple le système UWB-OFDM décrit par les auteurs I. Siaud et A.M. Ulmer-Moll dans l'article "Harmonized Multi-RF band UWB-OFDM air interfaces for WPAN applications", MGWS'09 workshop, Tokyo, September 2009, ou encore un système du standard IEEE802.15.3c défini dans le document IEEE P802.15.3c/D07, "Part 15.3: Wireless Medium Access Control (MAC) and Physical Layer (PHY) Specifications for High Rate Wireless Personal Area Networks (WPANs):Amendment 2: Millimeter-wave based Alternative Physical Layer Extension", May 2009) permet d'atteindre un débit de plusieurs Gbit/s suivant la canalisation choisie.

Suivant le niveau de puissance d'émission rayonnée, les couvertures radio du système 802.11n sont proches de celles des systèmes WPAN (selon la terminologie anglosaxonne WPAN : Wireless Personal Area Network (réseau à courte portée : la distance d (portée)<20 m)) utilisant une technique de transmission UWB-OFDM.

Pour établir une communication entre deux entités communicantes conformes au premier exemple, séparées d'une distance d, en garantissant un débit D et un TEB (Taux d'Erreur Binaire) cible TEBc représentatif d'une qualité de service QoS donnée, se pose le problème de savoir sur quel critère sélectionner un mode de transmission.

Une sélection par discrimination des débits (ou sélection par débit) est décrite dans les documents élaborés dans le cadre d'un projet européen appelé MAGNET (IST-FP6) accessibles à l'adresse Internet : http://magnet.aau.dk/. Cette sélection intervient entre deux modes de transmission, l'un associé à une interface I1 de type UWB délivrant des débits de l'ordre de 250 kbit/s (UWB-FM technique) et l'autre, associé à une interface I2, de type multi-porteuse à étalement par codes dans le domaine fréquentiel (MC-SS en anglais : Multi-Carrier Spread Spectrum technique) délivrant des débits compris entre 1.8 Mbit/s et 130 Mbit/s opérant à 5.2 GHz, implémentées sur une même entité de communication Pnc, Dev.

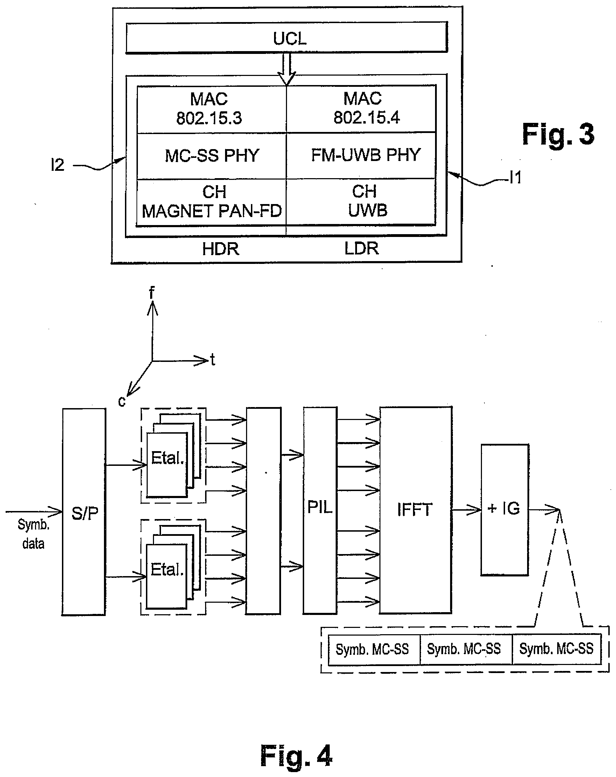

Cette sélection des modes de transmission est gérée dans le système IST-FP6 MAGNET au niveau d'une couche commune aux deux modes de transmission dite couche de convergence (UCL : Universal Convergence layer). La figure 3 est un schéma de la composition d'un système IST-FP6 MAGNET. Cette couche de convergence UCL qui se situe juste au dessus de la couche protocole (MAC) de chacune des interfaces de transmission I1 et I2, génère les messages d'échanges entre une première entité de communication, un émetteur Pnc et plusieurs deuxièmes entités de communication, des récepteurs Dev, pour établir des communications avec une interface donnée.

Une entité de communication est indifféremment émetteur et/ou récepteur.

Cette sélection par discrimination des débits convient lorsque les débits sont très différents toutefois quand les modes de transmission délivrent des débits qui peuvent être équivalents cette sélection n'est pas satisfaisante.

Citons pour exemple une entité de communication qui comprend des interfaces de transmission compatibles respectivement d'un système UWB-WiMedia (ECMA-368), d'un système MC-SS du projet européen Magnet et d'un système IEEE802.11n qui couvrent des gammes de débits communes pour une même distance d d'un même scénario de déploiement WLAN/WPAN (selon la terminologie anglosaxonne WLAN : Wireless Local Area Network, la distance d (portée) est proche de 150 m en espace ouvert/ WPAN : Wireless Personal Area Network, la distance d (portée) est proche de 15-20 m). Un scénario de propagation est usuellement décrit par une gamme de couverture radioélectrique, typiquement inférieur à 20 m pour le scénario WPAN, un modèle de canal à trajets multiples et un modèle d'atténuation correspondant. Ces derniers modèles peuvent être différents suivant la largeur de bande de transmission du mode de transmission considéré.

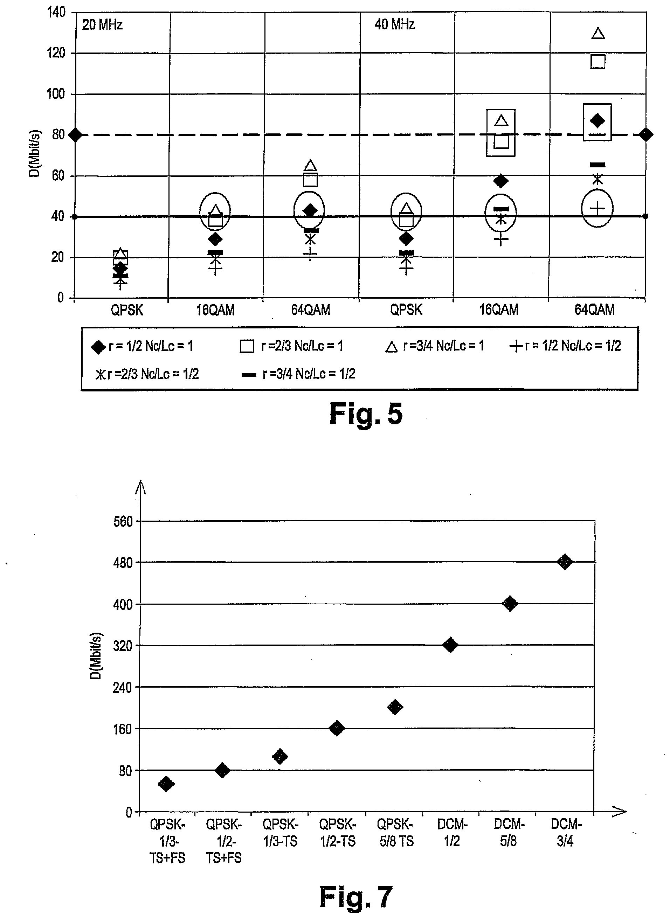

Le système MC-SS du projet européen MAGNET, représenté à la figure 4, repose sur une technique de transmission à étalement de spectre appliquée dans l'espace des fréquences suivie d'une modulation OFDM (le procédé est désigné par les termes Multi-Carrier Spread Spectrum (MC-SS)). Le débit dépend de la modulation des symboles de données (modulation numérique ou codage binaire à signal) et du rendement du codage correcteur d'erreur, du nombre de codes d'étalement implémentés ainsi que de la largeur de la bande de transmission (canaux de 20 ou 40 MHz), soit du nombre de symboles de données transmis simultanément par la modulation OFDM mise en oeuvre en aval du procédé d'étalement. Le système émet à une fréquence porteuse égale à 2.4 GHz ou 5.2 GHz. La figure 5 donne une illustration des différents débits D pouvant être obtenus pour différents modes de transmission associés à une interface de transmission de type MC-SS pour un système MAGNET. Les cercles et les carrés sur la figure 5 correspondent aux différents modes qui permettent d'obtenir respectivement soit un débit de 40Mbits à environ 3% près, soit un débit de 80Mbits à environ 3% près avec une limite supérieure d'environ 8%. Le débit D obtenu est proportionnel à la charge du système (charge=nombre Nc de codes d'étalement mis en oeuvre/taille Le du code d'étalement), à la taille de la bande de transmission via le nombre de symbole de données étalés par symbole OFDM et du schéma MCS de codage et de modulation. Suivant le nombre Nc de codes d'étalement mis en oeuvre, le débit est donné par :

$$D = \frac{N_{BPSC} \cdot r \cdot N_{SD}}{Tsymb} \cdot \frac{Nc}{Lc} \qquad (1)$$

avec $N_{BPSC}$ le nombre de bits par symbole de données, $N_{SD}$ le nombre de symboles par symbole OFDM dédiés à la transmission, Tsymb la durée du symbole OFDM et r le rendement de codage correcteur d'erreur.

La granularité du débit pour chaque schéma MCS de codage et de modulation est donnée par le débit délivré par le système lorsqu'un seul code est mis en oeuvre (Nc=1). Le tableau A.1 en Annexe A donne les valeurs de débit D d'un système MAGNET MC-SS obtenu en fonction du mode de transmission pour une charge Nc/Lc=Nc/8. Les valeurs de débit représentées à la figure 5 correspondent aux valeurs du tableau A.1 pour Nc=8 ou Nc=4. Les modes de transmission délivrant un débit de 40 Mbit/s ($\pm$3%) sont ceux qui coïncident avec la droite débit D = 40 Mbit/s et qui sont entourés d'un rond sur la figure 5. Les modes de transmission délivrant un débit de 80 Mbit/s ($\pm$3%) sont ceux qui coïncident avec la droite débit D = 80 Mbit/s et qui sont entourés d'un carré sur la figure 5.

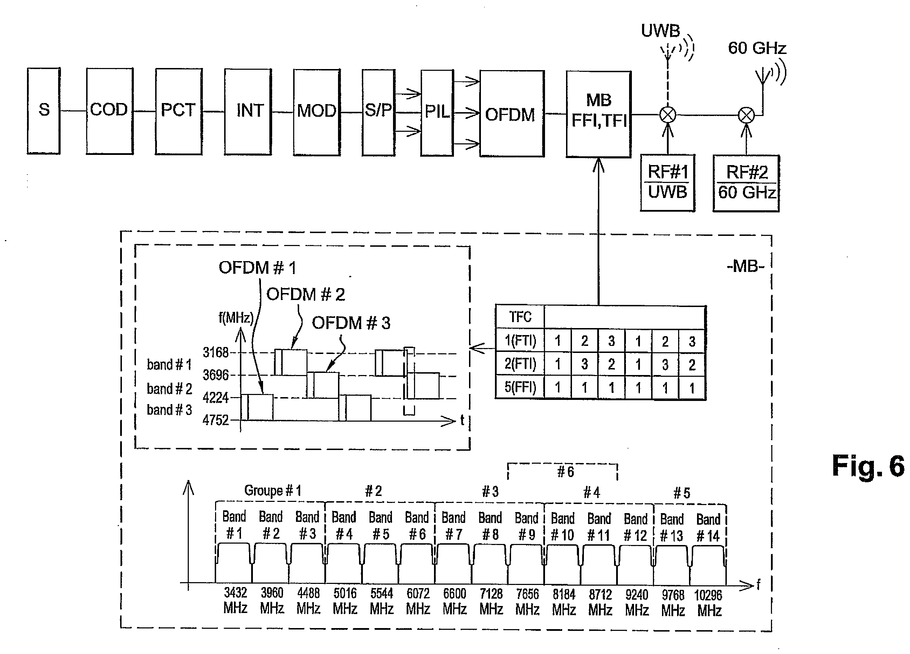

Le système Wi-Media/ECMA-368 illustré par la figure 6 repose sur une modulation OFDM dans un canal de 528 MHz assortie d'un procédé de saut de fréquence appliqué sur des symboles OFDM successifs. Ce procédé exploite un motif de saut désigné par Time-Frequency Coder (TFC) comme représenté sur la figure 6. Le procédé TFC est appliqué sur un "band-group" composé de trois canaux RF adjacents suivant un motif prenant en compte six symboles OFDM. Quatorze canaux RF sont définis dans la bande {3.1-10.6} GHz. Deux techniques de redondances sont mises en oeuvre à l'échelle des symboles de données et désignées dans le standard par technique d'étalement.

La technique d'étalement en fréquence désignée par Frequency Spreading (FS) consiste à dupliquer les symboles de part et d'autre de la fréquence zéro dans le multiplex OFDM suivant une symétrie hermitienne. Cela génère un signal réel en sortie du modulateur OFDM.

La technique d'étalement dans le domaine temporel désignée par Time Spreading (TS) consiste à émettre deux fois le même symbole OFDM sur des canaux différents donnés par le motif de saut (TFC). Ceci introduit une pseudo diversité qui résulte de canaux RF différents utilisés pour transmettre le même symbole OFDM.

Ces deux techniques d'étalement divisent chacune le débit par deux. Lorsqu'elles sont combinées ensemble, elles divisent le débit par quatre.

Les modulations numériques (codage binaire à signal) considérées sont les modulations QPSK ou DCM (Dual Carrier Modulation) pour lesquelles chaque symbole est constitué de deux bits. Le débit D obtenu pour les différents modes de transmission du système ECMA-368 (Wi-Media) est représenté sur la figure 7 avec en abscisse le mode de transmission identifié par la modulation numérique, le rendement de code correcteur et la technique d'étalement (par ex. : QPSK-1/3-TS+FS).

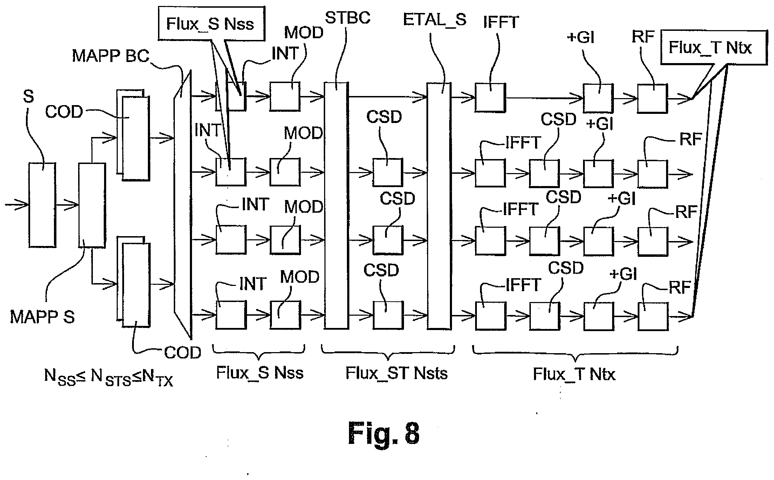

Les modes HT (High Throughput) du système IEEE802.11n, illustré par la figure 8, reposent sur une technique SISO/MIMO-OFDM consistant en une parallélisation de la transmission binaire sur plusieurs flux de transmission Flux_T destinés à des antennes d'émission distinctes. Les données à transmettre sont démultiplexées. Lorsque ce démultiplexage est réalisé sur les bits codés on désigne par flux spatiaux Flux_S les différents flux de transmission en sortie du démultiplexeur. Pour le système IEEE802.11n le nombre de flux spatiaux Nss varie entre un et quatre. Le nombre de flux spatiaux ainsi qu'un accroissement de la bande de transmission (20 ou 40MHz) permettent d'augmenter le débit de transmission via une parallélisation de la transmission sur plusieurs chaînes de transmission OFDM comme illustré sur la figure 8. Chaque chaîne de transmission comprend une modulation OFDM réalisée avec un canal de transmission de taille variable (20 MHz ou 40 MHz), une technique MIMO et un schéma de codage et de modulation propre à chaque flux spatial (Nss) (en général il est identique pour tous les flux spatiaux). Le système émet à une fréquence porteuse égale à 2.4 GHz ou bien à 5.2 GHz.

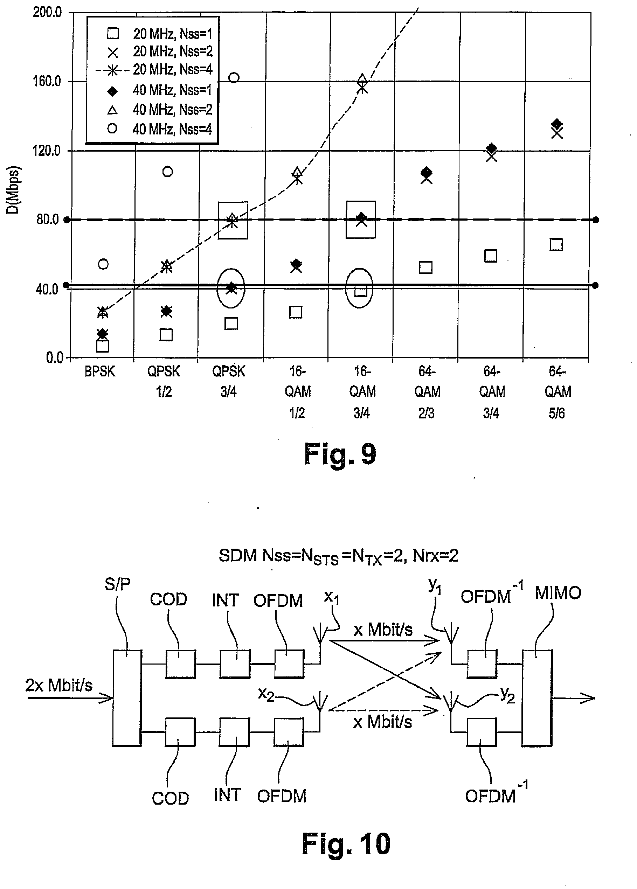

Pour le système IEEE802.11n de la figure 8, le débit D obtenu pour les différents modes de transmission, désignés par $MCS_{11n}$ dans le document du standard, est représenté sur la figure 9 avec en abscisse le mode de transmission identifié par la modulation numérique MOD et le rendement de code correcteur COD (par ex. : QPSK-1/2) et ce, pour un Tcp=800ns. Pour ce standard, les modes de transmission $MCS_{11n}$ sont numérotés en fonction du schéma MCS de codage et de modulation ainsi que du nombre Nss de flux spatiaux mis en oeuvre.

Le système 802.11n peut mettre en oeuvre des techniques dites de codage spatio-temporel. Celles-ci ne modifient pas le débit mais introduisent une redondance spatiale entre les $N_{SS}$ flux spatiaux ce qui augmente le nombre de flux de transmission en sortie du bloc STBC. Les flux ainsi formés sont désignés par flux spatio-temporels.

Les valeurs de débit D obtenues en fonction du mode de transmission sont données dans le tableau C.1 en annexe C.

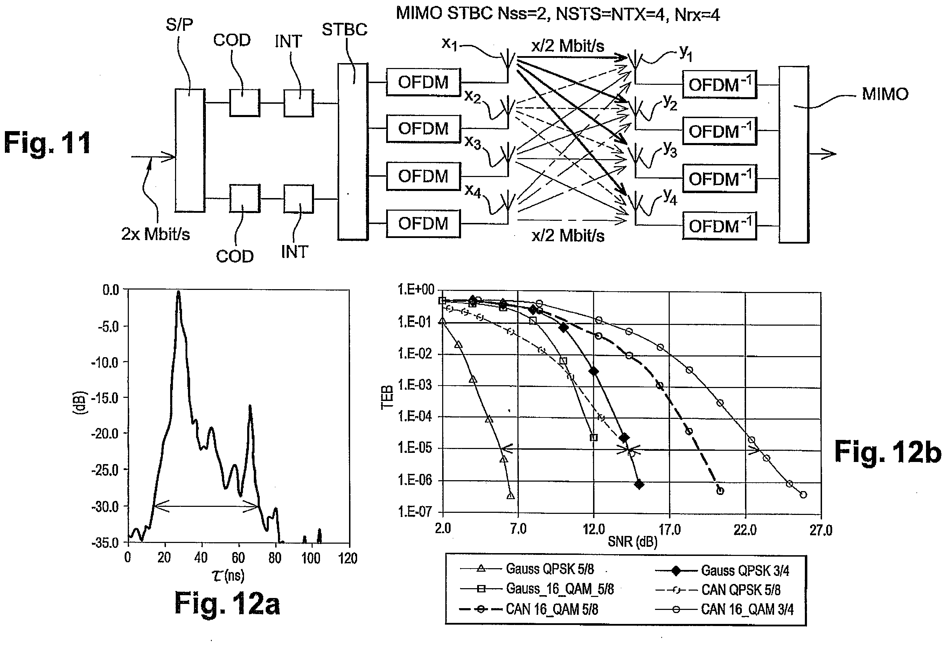

Etant donné que la définition du mode de transmission au sens de l'invention inclue le paramétrage d'une technique MIMO et du codage associé (SDM pour Spatial Division Multiplexing, STBC pour codage Alamouti, etc), ceci implique qu'un même $SCM_{11n}$ d'un système IEEE802.11n couvre plusieurs modes de transmission au sens de l'invention. Par exemple, une configuration comprenant une technique MIMO de type SDM (Spatial Division Multiplexing) pour laquelle les flux spatiaux ne subissent aucun codage spatial temporel (Nss=$N_{STS}$=$N_{TX}$) illustrée par la figure 10 et une configuration comprenant une technique STBC illustrée par la figure 11 conduisent à des débits identiques et sont référencées de manière identique et couvertes par un même $SCM_{11n}$ dans le standard IEEE802.11n. Suivant la définition du mode de transmission au sens de l'invention, ces deux configurations correspondent à deux modes de transmission distincts différentiés par la technique MIMO et le codage associé mis en oeuvre.

Les trois systèmes précédents peuvent opérer dans la même bande de fréquence. Le système IEEE802.11n illustré par la figure 8 opère sur les canaux RF 2.4GHz et 5.2GHz. Le système MC-SS du projet européen MAGNET illustré par la figure 4 utilise les canaux RF du système IEEE802.11n. Le système Wi-Media/ECMA-368 illustré par la figure 6 émet dans la bande {3.1-10.6}GHz.

Pour délivrer un débit D de l'ordre de 80 Mbit/s, l'entité de communication qui comprend des interfaces de transmission compatibles respectivement d'un système UWB-WiMedia (ECMA-368), d'un système MC-SS du projet européen Magnet et d'un système IEEE802.11n, peut être paramétrée de différentes manières :

- sélection d'un mode de transmission associé au système Wi-Media/ECMA-368 dont la bande de transmission est de 528 MHz (507,375 MHz de bande efficace) dans les bandes {3.1-10.6} GHz, paramétré de la manière suivante : modulation QPSK ½ assortie des procédés TS (Time Spreading) et FS (Frequency Spreading) du standard (Annexe 1) ou
- sélection d'un mode de transmission associé au système MC-SS de MAGNET paramétré de la manière suivante : 16-QAM ¾ ou bien 16QAM 2/3 ou bien 64-QAM 1/2 à pleine charge (Nc/Lc=1) opérant à 2.4 GHz ou à 5.2 GHz sur une bande de 40 MHz ou
- sélection d'un mode de transmission associé au système IEEE802.11n qui fonctionne soit 2.4 GHz soit à 5.2 GHz, paramétré de la manière suivante : $SCM_{11n}${QPSK-3/4, Nss=2, Bw=40 MHz} ou $SCM_{11n}${QPSK ¾, Nss=4, Bw=20 MHz} ou $4SCM_{11n}${16-QAM ¾, Nss=1, Bw=40 MHz} ou $SCM_{11n}${16-QAM ¾, Nss=2, Bw=20 MHz}, Nss correspond au nombre de flux spatiaux mis en oeuvre (figure 8).

Il s'avère par conséquent que la sélection du mode de transmission le plus approprié en fonction d'un critère de discrimination du débit ne peut aboutir pour cet exemple et dans le cas plus général où différents modes de transmission permettent d'atteindre la contrainte de débit D imposée ; le débit ne peut pas par conséquent servir de critère de sélection dans ces cas.

La puissance requise pour assurer un débit D est connue comme pouvant être un autre critère de sélection notamment dans le cas d'un système UNIK® de la société Orange France via le paramètre RSSI. Le système UNIK® dédié aux services voix est un système qui fonctionne en technique WiFi (bluetooth, IEEE802.11) et peut basculer sur le GSM lorsque la puissance reçue est en dessous d'un certain seuil. Ce seuil est défini par chaque constructeur et appelé paramètre RSSI. Le paramètre RSSI est un entier compris entre O et Nmax-1. Il correspond à une quantification de la puissance reçue entre deux valeurs seuils suivant une marge de variation de puissance reçue spécifiée par chaque constructeur. Cette puissance est mesurée au niveau du récepteur. En valeur réelle de puissance, le paramètre RSSI est au moins supérieur au seuil de sensibilité du système et assorti d'une marge supérieure associée à la dégradation introduite par le canal de propagation à trajets multiples.

Les mécanismes de basculement entre la technique WiFI et la technique 3G sont spécifiés dans le standard UMA (Unlicensed Mobile Access) défini dans le document UMA Architecture (Stage 2) R1.0.4 (2005-5-2), accessible à l'adresse http://www.umatechnology.org/specifications/. Le standard UMA comprend une interface réseau UMA NC (Network Controller) désignée par UNC qui gère le basculement et les requêtes au niveau réseau IP pour allouer une ressource au terminal (MS) lorsque ce dernier bascule sur le système 3G. Lorsque le terminal est dans la cellule 3G, il rebascule en technique WiFi dès qu'il se trouve dans la zone d'un point d'accès WiFi sous réserve d'authentification et de satisfaire le critère RSSI. Dans le standard UMA (couche 2) en annexes A et B des valeurs minimales de puissances reçues et émises sont données pour chaque technique WiFi ainsi que des gains d'antennes typiques en émission et en réception, pour le point d'accès et le terminal.

Ce critère de puissance requise n'est pas satisfaisant car sa plage de variation peut être complètement différente d'un système à un autre en fonction par exemple du constructeur du système, de la technologie utilisée par l'interface de transmission (optique, électromagnétique, filaire, etc), de la bande de fréquence du système (UWB, etc..)...

Les mécanismes connus de sélection d'un mode de transmission le plus adapté pour garantir un débit D, une qualité de service QoS et une portée d pour une entité de communication comprenant différents modes de transmission, ne sont pas satisfaisants compte tenu que les différents critères utilisés ne permettent pas d'effectuer la sélection dans tous les cas, en particulier pour les entités de communication préalablement décrites.

## Exposé de l'invention

L'invention propose une technique permettant d'améliorer la sélection d'un mode de transmission adapté pour garantir un débit D, une qualité de service QoS et une portée d pour une entité de communication comprenant différents modes de transmission.

Ainsi, l'invention a pour objet un procédé de sélection d'un mode de transmission, destiné à une première entité de télécommunication comprenant différents modes de transmission d'un signal de communication destiné à une deuxième entité de télécommunication, les différents modes de transmission assurant un même débit D. Le procédé comprend :

- une étape de détermination pour un mode de transmission donné de la valeur d'une première métrique $\alpha$ qui mesure une dégradation relative à une distance donnée d introduite par le support de transmission du signal de communication pour un environnement donné par rapport à un modèle de référence du support de transmission, résultat d'un effet multi trajets MCM et/ou d'un effet d'atténuation du support de transmission MCBE, tel que l'effet multi trajets MCM est déterminé en effectuant la différence entre un seuil de sensibilité multi trajets du mode de transmission et un seuil de sensibilité du mode de transmission, le seuil de sensibilité correspondant à une puissance minimale requise pour assurer un débit D avec un TEB cible représentatif de la QoS sur un support de transmission gaussien,

- une étape de comparaison des valeurs de la première métrique $\alpha$ pour différents modes pour sélectionner au moins un mode de transmission Modei.

L'invention a en outre pour objet une entité de communication comprenant au moins deux modes de transmission différents.

Ainsi, une entité de communication selon l'invention comprend :

- un module de détermination pour un mode de transmission donné de la valeur d'une première métrique $\alpha$ qui mesure une dégradation relative à une distance donnée d introduite par le support de transmission du signal de communication pour un environnement donné par rapport à un modèle de référence du support de transmission, résultat d'un effet multi trajets MCM et/ou d'un effet d'atténuation du support de transmission MCBE, tel que l'effet multi trajets MCM est déterminé en effectuant la différence entre un seuil de sensibilité multi trajets du mode de transmission et un seuil de sensibilité du mode de transmission, le seuil de sensibilité correspondant à une puissance minimale requise pour assurer un débit D avec un TEB cible représentatif de la QoS sur un support de transmission gaussien,
- un module de comparaison des valeurs de la métrique pour différents modes pour sélectionner au moins un mode de transmission.

Ainsi, l'utilisation d'une métrique de référence $\alpha$ dont la valeur ne dépend pas directement de la technologie de l'interface de transmission associée au mode de transmission donné, permet de comparer entre elles les valeurs obtenues de la métrique $\alpha$ puisque cette métrique a une plage de variation commune aux différents modes de transmission, en particulier quelle que soit la puissance reçue par la deuxième entité.

La mesure de l'effet multi trajets est simple puisqu'elle résulte de la soustraction de deux valeurs généralement accessibles sous forme de courbes dans la documentation technique associée à une entité.

Un procédé et une entité selon l'invention sont donc particulièrement avantageux puisqu'ils permettent de sélectionner un mode de transmission quelles que soient les technologies mises en oeuvre par les interfaces associées. De manière particulièrement avantageuse, l'expression de la métrique $\alpha$ élimine les composantes spécifiques du signal de communication correspondant à une fréquence porteuse associée à une transmission en particulier de type RF, optique ou filaire et permet une gamme de variation commune quel que soit le niveau de puissance reçue.

Par conséquent, un procédé et une entité de communication selon l'invention permettent plus particulièrement de comparer des modes de transmission associés respectivement à des fréquences porteuses de transmission du signal de communication différentes donc sous entendu associés à des interfaces de communication différentes, par exemple de type radio, optique ou CPL (Courant Porteur en Ligne ou PLT, Power Line Transmission selon la terminologie anglo-saxonne), en comparant les différentes valeurs de la métrique calculées pour chacun de ces modes. La sélection porte sur les modes de transmission pour lesquels la valeur de la métrique satisfait un critère de seuil. Typiquement, seuls sont retenus les modes de transmission pour lesquels la valeur de la métrique est supérieure à un seuil pour la distance d donnée correspondant généralement à la distance entre la première et la deuxième entités de télécommunication.

Selon un mode préféré de réalisation de l'invention, la première métrique $\alpha$ est le résultat d'une somme pondérée d'une dégradation liée à l'effet multi trajets MCM et d'une dégradation liée à l'effet d'atténuation du support de transmission MCBE.

La pondération permet par le choix des valeurs de pondération de limiter les calculs inutiles typiquement dans le cas où seul un des effets, multi trajets ou atténuation du support de transmission, est perceptible compte tenu de l'environnement des deux entités en communication.

Selon un mode préféré de réalisation de l'invention, le procédé comprend en outre pour les modes de transmission sélectionnés :

- une étape de détermination de la valeur d'une seconde métrique $\beta$ qui mesure l'excédent de puissance non normalisée disponible à la distance d, c'est-à-dire la différence entre la puissance disponible et la puissance minimale requise,
- un choix d'un mode de transmission pour lequel la seconde métrique $\beta$ franchit un seuil donné..

Selon ce mode, le procédé détermine une seconde métrique $\beta$ qui tient compte de l'excédent de puissance entre la puissance disponible et la puissance requise. Ce mode est particulièrement avantageux puisqu'il permet de contrôler que le mode sélectionné fournit une puissance suffisante qui dépasse le seuil de sensibilité de la deuxième entité. Le cas selon lequel aucun des modes ne fournit de puissance suffisante pour dépasser le seuil, traduit le fait que la deuxième entité est hors de couverture de la première entité. Après la sélection du mode de transmission, le procédé peut ajuster la puissance rayonnée en fonction de l'excédent de puissance mesurée par la seconde métrique.

Selon un mode préféré de réalisation de l'invention, le procédé consiste à répéter pour différentes distance $d_j$ un procédé de sélection selon un objet précédent.

Ce mode permet de couvrir plusieurs distances.

Selon un mode préféré de réalisation de l'invention, la seconde métrique $\beta$ est calculée selon la relation suivante : $\beta= Gr+PIRE-\alpha-S-PL_{FS}(d)$, dans laquelle PIRE est la puissance rayonnée en sortie de l'antenne d'émission de l'entité émettrice, Gr, est le gain de l'antenne en réception, S est la puissance minimale requise pour assurer le débit D avec une QoS donnée pour un canal Gaussien, $PL_{FS}(d)$ est l'atténuation de propagation en espace libre.

Selon un mode préféré de réalisation de l'invention, le procédé comprend en outre une étape d'émission d'une trame préambule dédiée qui comprend des séquences dédiées à l'estimation du support de transmission pour au moins deux modes de transmission différents..

Ce mode permet d'obtenir de manière simple la mesure de la dégradation liée à l'effet multi trajets de manière quasi simultanée pour les différents modes de transmission candidats à la sélection.

Selon un mode préféré de réalisation de l'invention, le procédé comprend en outre une mise à jour de la valeur de la première et de la seconde métriques $\alpha$, $\beta$ à partir d'une estimation du support de transmission effectuée sur les données (champ PSDU) transmises par le signal de communication entre les deux entités.

Ce mode de réalisation permet une mise en jour de la valeur des métriques quasi en temps réel puisque effectuée à partir du champ de données d'une trame de données. Cette mise à jour permet de manière particulièrement avantageuse de pouvoir ajuster la sélection d'un mode de transmission aux évolutions de l'environnement. De telles évolutions peuvent intervenir lorsqu'une des entités de télécommunication est en mobilité. Ce mode de réalisation est donc avantageux puisqu'il assure un fonctionnement dynamique au procédé de sélection.

Selon un mode préféré de réalisation de l'invention, un mode de transmission étant associé à une interface de transmission $I_j$, le procédé comprend en outre un déclenchement d'une émission d'une trame préambule dédiée qui comprend des séquences dédiées à l'estimation du support de transmission pour au moins deux interfaces de transmission du système dès que la valeur de la première métrique $\alpha$ mise à jour sort d'un intervalle donné $\alpha_{min} < \alpha j < \alpha_{max}$ et que le mode sélectionné à partir de la seconde métrique $\beta$ mise à jour est associé à une interface de transmission distincte de celle associée au précédent mode sélectionné.

En fonction des évolutions de l'environnement, la valeur de la métrique $\alpha$ peut évoluer de manière notable et franchir des valeurs seuils fixées par exemple à l'issue de simulations. La détection de ces franchissements et du changement d'interface déclenche une trame préambule dédiée qui permet d'effectuer une mesure de la métrique pour différents modes et de sélectionner éventuellement un autre mode de transmission. Ce mode de réalisation est donc avantageux puisqu'il assure un fonctionnement dynamique au procédé de sélection et assure une adaptation de la sélection du mode de transmission aux évolutions de l'environnement sans intervention d'un quelconque opérateur.

Selon un mode préféré de réalisation de l'invention, l'entité de communication comprend plusieurs interfaces de transmission, les modes de transmission étant associés à une des interfaces de transmission, telle que les interfaces de transmission appartiennent à une liste comprenant :

- une interface de type PLT (CPL),
- une interface de type radio RF,
- une interface de type optique.

Les différents modes de réalisation précédents peuvent être combinés ou pas avec un ou plusieurs de ces modes pour définir un autre mode de réalisation.

L'invention a en outre pour objet un système de télécommunication à modes de transmission multiples adapté pour la mise en oeuvre d'un procédé selon l'invention.

Ainsi, un système de télécommunication selon l'invention, comprend une entité de communication selon l'invention.

Selon une implémentation préférée, les étapes du procédé de sélection selon l'invention sont déterminées par les instructions d'un programme incorporé dans un circuit électronique telle une puce elle-même pouvant être disposée dans un dispositif électronique tel une entité de communication. Le procédé de sélection, selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quel dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront lors de la description qui suit d'exemples particuliers faite en regard de figures annexées données à titre d'exemples non limitatifs.

La figure 1 est une représentation schématique de la structure d'une trame de la couche physique de niveau un et de la trame correspondante de la couche MAC (Media Access Control) de niveau deux, en référence au modèle OSI.

La figure 2 représente un exemple de trame Physique (structure du PPDU) correspondant à une trame du mode MAC trame unique du standard ECMA-368.

La figure 3 est un schéma de la composition d'un système IST-FP6 MAGNET comprenant deux interfaces de transmission (MC-SS et UWB-FM) délivrant des débits disjoints, il fait apparaître la couche UCL qui gère la sélection des modes de transmission associés à ces interfaces. Le système opère sur les canaux RF du système IEEE802.11n (2,4 GHz et 5,2 GHz) pour l'interface de transmission MC-SS et dans la bande UWB {3,1-10,6} Ghz pour l'interface de transmission UWB-FM.

La figure 4 est une illustration schématique de la couche PHY du système MAGNET mettant en oeuvre une technique de transmission dite MC-SS (Multi-Carrier Spread Spectrum) assortie de différents schémas de codage et modulation (MCS) générant différents modes de transmission.

La figure 5 représente différents débits pouvant être obtenus pour différents modes de transmission associés à l'interface de transmission de type MC-SS du système MAGNET.

La figure 6 est un schéma de la couche PHY du système Wi-Media/ECMA-368 qui repose sur une modulation OFDM réalisée sur des canaux de 528 MHz assortie d'un procédé de saut de fréquence appliqué sur des symboles OFDM successifs associés à des canaux adjacents d'un band-group.

La figure 7 représente le débit obtenu pour les différents modes de transmission du système ECMA-368.

La figure 8 est un schéma descriptif de la couche PHY du système IEEE802.11n. Ses modes de transmission exploitent la technique de transmission MIMO. L'augmentation du nombre de flux spatiaux ($1 \leq Nss \leq 4$) et l'accroissement de la bande de transmission (20 ou 40MHz) permettent d'augmenter le débit de transmission via une parallélisation des trains de bits à transmettre pour un tel système.

La figure 9 représente les débits obtenus pour les différents modes de transmission du système IEEE802.11n désignés par $MCS_{11n}$ dans le présent document. Les débits sont donnés en fonction des schémas de codage et modulation (MCS), du nombre de flux spatiaux Nss et de la taille des canaux (20 ou 40 MHz) et ce, pour une taille du préfixe cyclique égale à 800 ns.

La figure 10 est un schéma d'une configuration d'un système IEEE802.11n comprenant une technique MIMO de type SDM (Spatial Division Multiplexing) pour laquelle les flux spatiaux ne subissent aucun codage spatio-temporel ($Nss=N_{STS}=N_{TX}$).

La figure 11 est un schéma d'une configuration d'un système IEEE802.11n comprenant une technique MIMO de type STBC avec 2 flux spatiaux, 4 flux spatio-temporels, 4 antennes à l'émission et à la réception.

La figure 12a représente la réponse impulsionnelle du canal associé à la figure 12b.

La figure 12b représente le TEB en fonction du rapport signal à bruit (SNR), pour différents modes de transmission (différents MCS pour une même technique de transmission) en environnement multitrajet et sur canal parfait. Cette figure permet de représenter la marge canal multi trajets pour deux modes de transmission (MCS).

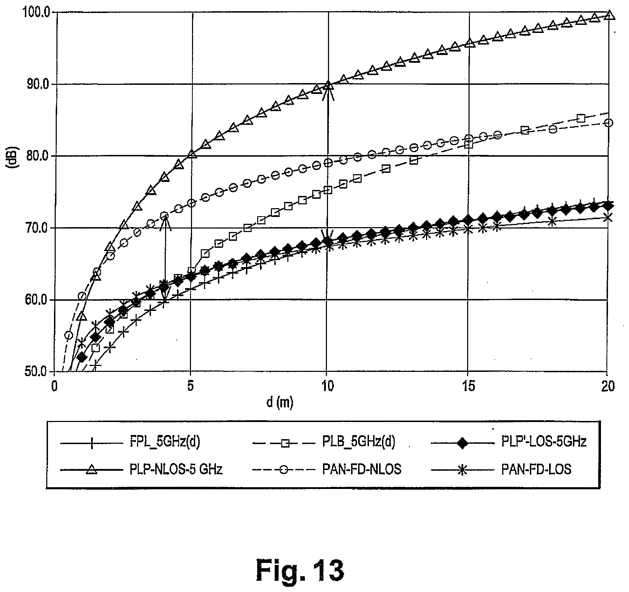

La figure 13 représente différents modèles d'atténuation du canal de propagation en fonction de la distance d pour une fréquence RF fc égale à 5.2 GHz et pour différents scénarios de déploiement dits WPAN (Wireless Personal Area Network : d<5 m) : le modèle en espace libre ($F_{PL\_5GHz}$(d), le modèle PLB_5GHz(d) associé au standard IEEE802.11n et à un canal très peu sélectif en fréquence (canal B), les modèles UWB spécifiés par P. Pagani et dérivé de l'article Pagani, P. & Pajusco, P., "Statistical Modeling of the Ultra Wide Band Propagation Channel through the Analysis of Experimental Measurements", Comptes Rendus Physique de l'Académie des Sciences, vol. 7, no. 7, pp. 762-773, Sept. 2006 en LOS et en NLOS à 5 GHz(PLP-LOS_5GHz/PLP-NLOS_5GHz) et les modèles issus du projet IST-MAGNET désignés par PAN-FD (PAN Fixed Device)(pas d'obstruction, LOS) et en espace obstrué (NLOS).

La figure 14 est un organigramme d'un mode de réalisation particulier d'un procédé de sélection selon l'invention.

La figure 15 est un organigramme d'un mode de réalisation particulier d'un procédé de sélection selon l'invention.

La figure 16 représente les valeurs de la première métrique $\alpha$ en fonction de la distance d pour les modes de transmission 16QAM 2/3 et 16QAM ¾ pour le scénario considéré LOS d'un système MC-SS MAGNET et pour les modes de transmission $MCS_{11n}10$ et $MCS_{11n}26$ d'un système IEBE802.11n, valeurs qui sont extraites des figures 19 et 21.

La figure 17 représente les valeurs de la première métrique $\alpha$ en fonction de la distance d pour le mode de transmission 16QAM 2/3 pour le scénario considéré NLOS d'un système MC-SS MAGNET et pour le mode de transmission $MCS_{11n}26$ d'un système IEEE802.11n, valeurs qui sont extraites des figures 19 et 21.

La figure 18 est un organigramme illustrant une mise en oeuvre particulière d'un procédé de sélection selon l'invention.

La figure 19 représente les valeurs de la première métrique $\alpha$ pour un débit cible de 80 Mbit/s en fonction de la distance d pour le système MC-SS de MAGNET. Deux scénarios WPAN associés à des transmissions LOS et NLOS sont considérés ainsi que deux modes de transmission 16QAM 2/3 et 16QAM ¾ d'un système MC-SS MAGNET.

La figure 20 représente les valeurs de la seconde métrique $\beta$ pour le mode sélectionné 16-QAM 2/3 sur la base de la première métrique a, pour le même système MC-SS MAGNET que celui de la figure 19.

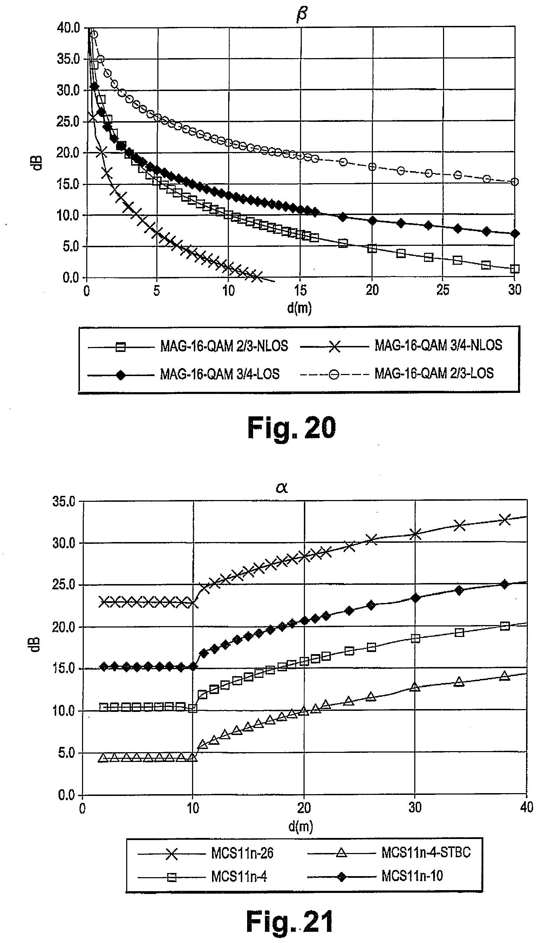

La figure 21 représente les valeurs de la première métrique $\alpha$ pour un débit de 80 Mbit/s en fonction de la distance d pour le système IEEE802.11n. Pour d<6m, un scénario WPAN LOS est considéré et un scénario NLOS au delà. Quatre modes de transmission $MCS_{11n}10$, $MCS_{11n}4$, $MCS_{11n}4$-STBC et $MCS_{11n}26$ sont considérés. Ils mettent en oeuvre une technique de transmission MIMO SDM à l'exception du mode $MCS_{11n}4$-STBC qui met en oeuvre un codage d'Alamouti,. Ces modes sont détaillés en annexe E. Le nombre d'antennes à l'émission est égal au nombre d'antennes en réception ($N_{TX}=N_{RX}$), la taille des canaux et le nomvre de flux spatiaux sont variables.

La figure 22 représente les valeurs de la seconde métrique $\beta$ pour les quatre modes de transmission sur la base de la première métrique a, pour un système IEEE802.11n.

La figure 23 représente les valeurs de la première métrique $\alpha$ en fonction de la distance d pour un débit D=80 Mbit/s pour les modes de transmission du système MAGNET définis en fig.19 ainsi que pour les modes de transmission du système IEEE802.11n définis en fig.21.

## Description d'un mode de réalisation de l'invention

Le procédé de sélection selon l'invention exploite une métrique $\alpha$ pour comparer les performances obtenues avec les différents modes de transmission, chaque mode étant associé par définition à une interface de transmission qui peut être identique et/ou différente entre les différents modes.

Cette métrique $\alpha$ mesure la dégradation relative introduite par le canal de transmission pour une entité de télécommunication donnée dans un environnement donné par rapport à un modèle de référence du support de transmission, en tenant compte d'une part de l'effet multi-trajets et d'autre part de l'atténuation du canal de propagation (PL(d)).

La métrique $\alpha$ est typiquement le résultat en dB d'une somme pondérée d'une dégradation MCM liée à l'effet multi trajets et d'une dégradation MCBE (Marge Canal Bande Etroite) liée à l'effet d'atténuation du support de transmission.

L'effet multi trajets du canal de propagation impacte les performances au niveau de la couche physique (performances radio) par rapport à une transmission sur un canal dit parfait. L'effet multi trajets se traduit par une dégradation relative qui limite la fiabilité de la liaison pour un mode de transmission donné. La mesure de cette dégradation est obtenue par la différence en dB du seuil de sensibilité multi trajets $S_M$ du mode de transmission donné et du seuil de sensibilité S de ce même mode au même débit. Cette mesure est désignée par le sigle MCM qui signifie "Marge Canal Multi-trajet". Ce paramètre MCM permet de comparer les performances au niveau lien de modes de transmission différents.

Le seuil de sensibilité multi trajets $S_M$ d'un mode de transmission pour un scénario de propagation est la puissance minimale requise pour assurer un débit de transmission D avec un TEB cible(QoS) lorsque le canal de propagation est à trajets multiples. Le seuil de sensibilité multi trajets dépend :

- du rapport signal à bruit requis pour le mode de transmission pour atteindre un débit et un TEB cible associé à la QoS (TEB cible typiquement de $10^{-5}$),
- du bruit thermique Pb.

Le bruit thermique Pb exprimé en dBm décrit les imperfections des composants des étages RF d'une entité de communication. Ce bruit thermique Pb présente des variations très différentes d'un mode de transmission considéré à un autre en fonction de la largeur de bande de transmission, de la température de bruit T du récepteur et de l'efficacité spectrale. Le bruit thermique Pb s'exprime souvent en fonction d'une valeur de référence Pb0 égale à -114 dBm correspondant à une température de bruit de référence T0 fixée à 290 K et à une bande de transmission de 1 MHz. La contribution de bruit thermique est donnée par :

$$P_b = 10 \cdot Log(kTB_w) + L_0 = 10 \cdot Log(kTo) + 10 \cdot Log(\frac{T}{T0}) + 10Log(Bw) + L_0$$

$$P_b = -114dBm + 10 \cdot Log_{10}(Bw_{MHz}) + NF + L_0 \quad (dBm) \tag{1}$$

$$P_b = -114\,dBm + 10 \cdot Log_{10}(D) - 10 \cdot Log_{10}(Eff) + NF + L_0 \quad (dBm)$$

$$Eff = D/Bw$$

avec T la température de bruit de l'entité de communication, NF le facteur de bruit (NF=10*Log10 (T/T0), Bw la bande passante efficace du mode de transmission, Lo les pertes câbles, k la constante de Boltzmann et Eff l'efficacité spectrale du mode de transmission. Le seuil de sensibilité S ne dépend pas de la puissance émise, ni des gains d'antennes.

Le seuil de sensibilité multi trajets $S_M$ dépend du mode de transmission, de la qualité désirée (TEB cible), de la contribution de bruit thermique, du rapport signal à bruit déduit des simulations au niveau lien dans un contexte multi trajets associé à un scénario de propagation, il peut s'exprimer comme suit :

$$S_M = SNR + Pb$$

$$S_M = SNR + kTB_w + L_0 = SNR + 10 \cdot Log(kT) + 10 \cdot Log(Bw) + L_0$$

$$S_M = SNR + 10 \cdot Log(kT0) + +10Log(\frac{T}{To}) + 10 \cdot Log(Bw) + L_0 \tag{2}$$

$$S_M = SNR - 114dBm + NF + 10 \cdot Log_{10}(Bw_{MHz}) + L_0 \quad (dBm)$$

$$SNR_{TEBc=10^{-5}} = (\frac{Ebu}{No})_{TEBc=10^{-5}} \cdot \frac{D}{B_w}$$

En considérant l'équation précédente, le seuil de sensibilité multi trajets $S_M$ peut être exprimé en fonction du débit D :

$$SNR_{BER=10^{-5}} = (\frac{Ebu}{No})_{BER=10^{-5}} \cdot \frac{D}{B_w}$$

$$S_M = SNR + kTB_w + L_0 = \frac{Ebu}{No} + 10 \cdot Log(kT) + 10 \cdot Log(D_{Mbps}) + L_0 \tag{3}$$

$$S_M = \frac{Ebu}{No} + 10 \cdot Log(kT0) + 10Log(\frac{T}{To}) + 10 \cdot Log(D_{Mbps}) + L_0$$

$$S_M = \frac{Ebu}{No} - 114dBm + NF + 10 \cdot Log_{10}(D_{Mbps}) + L_0 \quad (dBm)$$

Le seuil de sensibilité S d'un mode de transmission correspond à la puissance minimale requise pour assurer un débit D, calculé sur le champ de données, avec un TEB cible (TEBc) représentatif de la QoS sur canal Gaussien (canal parfait entaché d'une contribution de bruit AWGN (Additive White Gaussian Noise) c'est-à-dire sans trajet multiple (typiquement une fonction Dirac). L'expression de S est identique à celle de $S_M$ en utilisant les notations :

$$(\frac{Ebu}{NO})_c^{AWGN} \quad et \quad SNR_c^{AWGN}.$$

La marge canal multi trajets MCM est une donnée sans dimension qui peut se déduire de plusieurs variables, SNR, Ebu/No ou puissance requise minimale selon les expressions suivantes :

$$MCM = (\frac{Ebu}{N0})_c - (\frac{Ebu}{N0})_c^{AWGN}$$

$$MCM = SNR_c - SNR_c^{AWGN} \qquad (4)$$

$$MCM = S_M - S$$

avec $(Ebu/No)c$ l'énergie moyenne par bit utile divisée par la densité spectrale de bruit qui est requise pour un taux d'erreur binaire cible TEBc, SNRc le rapport signal à bruit correspondant et $S_M$ la puissance minimale requise en réception pour ce même TEBc.

Le paramètre MCM correspond à la puissance supplémentaire (ou à la variation du rapport Signal à bruit ΔSNR en dB ou à la variation de l'énergie par bit utile divisée par la densité spectrale de bruit ΔEbu/No en dB), dans un contexte multi trajets, nécessaire pour atteindre un TEB identique au cas Gaussien, pour un mode de transmission donné.

La figure 12b représente le TEB en fonction du SNR pour différents modes de transmission et pour un canal Gaussien et un canal multi trajets. Pour un même TEB et un même mode, la marge canal multi trajets MCM est la distance entre les deux courbes correspondant respectivement au canal gaussien et au canal multi trajets représentée sous la forme d'une double flèche sur la figure 12b.

L'effet d'atténuation du canal de propagation dans un contexte multitrajet et en liaison partiellement obstruée introduit une atténuation supplémentaire et entraîne une réduction de la couverture radioélectrique (portée) d'une interface de transmission, en considérant successivement une transmission idéale point à point sans obstruction et une transmission dans un environnement comprenant des obstacles qui obstruent la liaison et augmentent l'atténuation due au canal de propagation. L'atténuation due au canal de propagation modélisée par une équation du type PL(d) est une variable physique représentative de l'environnement physique qui se déduit de mesures expérimentales. L'effet d'atténuation relatif du au canal de propagation ne dépend que de l'environnement et du scénario de déploiement (portée, antenne, etc) et ne dépend pas de l'entité de télécommunication à l'exception de l'impact de la fréquence porteuse de transmission dans le calcul de l'atténuation. Un signal émis à une puissance Pt est reçu à une distance d avec une puissance Pr avec Pr<Pt. Le ratio entre Pt et Pr représente l'atténuation de propagation pour des gains d'antennes égaux à zéro (l'effet des antennes (gains d'antenne GT et Gr) n'est pas considéré afin de fournir le modèle d'atténuation pour un environnement donné).

Le modèle d'atténuation le plus simple est le modèle en espace libre déduit de l'équation de transmission de Friis connue de l'homme du métier. Ce modèle correspond à l'atténuation lorsqu'aucun obstacle n'obstrue la liaison. La dépendance en distance de l'atténuation varie en $(d/do)^2$ où d est la distance entre les deux points de mesures et do une distance de référence fixée à 1m en général. La formule de l'équation de transmission de Friis est la suivante :

$$PL_{FS}(d, fc)_{dB} = -27.55 + 20 \log(fc_{MHz}) + 20 \log(d_m / d0 = 1m) \qquad (5)$$

avec $d_m$ la distance exprimée en m et $fc_{MHz}$ la fréquence porteuse exprimée en MHz.

Lorsque la liaison est obstruée ou légèrement obstruée, l'équation de transmission est modifiée et l'atténuation en fonction de la distance est proportionnelle à $(d/do)^n$ avec n>2. La formule modifiée a la forme suivante :

$$PL_{MFS}(d, fc) = PL_{FS}(d_0, f_c) + 10 \cdot n \log_{10}\left(\frac{d}{d_0}\right) + \sigma \qquad (6)$$

$$PL_{FS}(d_0, fc) = PL_{FS}(d_0, f_{c0}) + 20 * Log(\frac{fc}{f_{c0}}) \qquad (7)$$

avec $f_{c0}$ la fréquence de référence, σ l'écart type associés au modèle de propagation.

La figure 13 donne l'atténuation en fonction de la distance d pour différentes fréquences porteuses fc en espace libre (pas d'obstruction=LOS) et en espace obstrué (NLOS). Les courbes PAN-FD-NLOS/LOS (PAN Fixed Device) correspondent à un scénario du projet MAGNET correspondant à un point d'accès fixe et une faible mobilité du terminal. Les courbes PLP-LOS/NLOS-5 GHz correspondent aux modèles d'atténuation UWB à 5.2 GHz précédemment référencés. La courbe FPL_5GHz(d) correspond au modèle en espace libre à 5.2 GHz. La courbe PLB_5GHz(d) correspond au modèle d'atténuation défini par le sandard IEEE802.11n lorsqu'on considère le canal RF à 5.2 GHz. Ce modèle est décrit par V. Erceg, L. Shumacher, P. Kyritsi, A. Molish, D.S Baum et al., dans le document "TGn Channel Models", IEEE P802.11, IEEE 802.11-03/940r1, November 2003.

En visibilité (LOS), les modèles d'atténuation sont tous équivalents quel que soit la procédure de modélisation (mesures). En non visibilité, les modèles présentent des variations liées aux conditions de mesures, à la bande de sondage du canal et aux hypothèses de modélisation.. Le modèle d'atténuation UWB-NLOS désigné par PLP-NLOS présente une atténuation plus importante que le modèle d'atténuation construit dans le cadre du projet MAGNET (PAN-FD-NLOS). Le modèle d'atténuation PLB issu de la normalisation IEEE802.11n est un modèle hybride visibilité/non visibilité. Au delà de 5 m, le modèle d'atténuation est supposé être en non visibilité et en visibilité pour des distances inférieures.

Le paramètre MCBE (Marge Canal Bande Etroite) correspond à l'atténuation supplémentaire entre les deux configurations espace obstrué/libre ; il permet de quantifier l'effet du milieu de transmission sur la sélection d'une interface de transmission. Pour une même distance et un même mode, la marge canal bande étroite MCBE est la distance entre les deux courbes correspondant respectivement à l'espace libre et à l'espace obstrué représenté sous la forme d'une double flèche sur la figure 13.

Cet écart MCBE ne dépend plus de la fréquence RF explicitement et permet en conséquence de ne prendre en compte que la dégradation relative du milieu, indépendamment de l'atténuation explicite de la fréquence et des puissances d'émission (le calcul de MCBE est fait pour une distance d donnée entre émetteur et récepteur). Le paramètre MCBE s'exprime sous la forme suivante :

$$MCBE = PL_{MFS}(d) - PL_{FS}(d) = 10 \cdot n \log_{10}\left(\frac{d}{d_0}\right) - 10 \cdot \log_{10}\left(\frac{d}{d_0}\right)^2 + \sigma$$

$$MCBE = 10 Log\left(\left(\frac{d}{d_0}\right)^{n-2}\right) + \sigma \tag{8}$$

Des modèles d'atténuation sont connus de l'homme du métier pour chaque environnement. Le tableau A.2 en annexe A donne les valeurs des paramètres à considérer pour les différents modèles de propagation considérés pour les systèmes MAGNET, IEEE 11n et UWB pris en compte, en relation avec les équations (6) et (7).

Le procédé de sélection d'un mode de transmission est mis en oeuvre par une entité de communication (point d'accès, station de base, terminal,etc) qui comprend plusieurs modes de transmission permettant d'atteindre un même débit D pour un ou plusieurs scénarios de propagation.. Chaque mode de transmission est associé à une interface de transmission. L'entité comprend une ou plusieurs interfaces différentes. Lors de l'établissement d'une communication avec une autre entité de communication (point d'accès, station de base, terminal, etc), le choix d'un mode de transmission commun doit être effectué par les entités. Ce choix est effectué par l'entité émettrice en mettant en oeuvre un procédé de sélection selon l'invention.

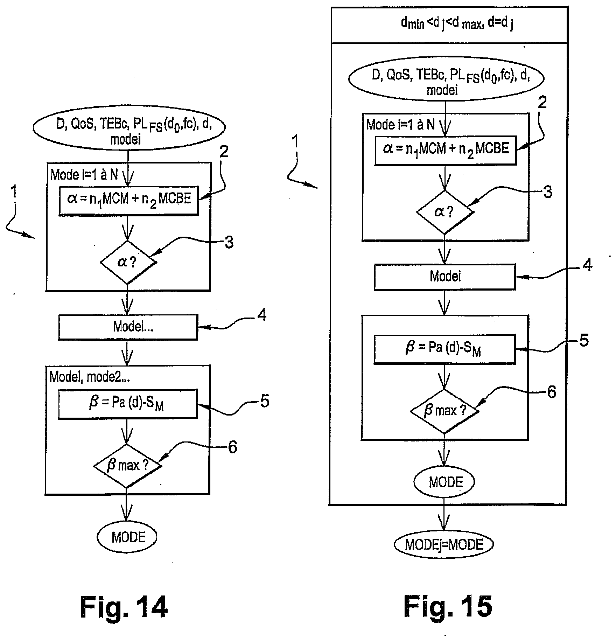

En référence à la figure 14, pour un mode de transmission donné, le procédé 1 de sélection détermine 2 la valeur de la métrique α pour une distance d :

$$\alpha = \eta_1 MCM + \eta_2 MCBE \tag{9}$$

Les coefficients de pondération $\eta_1$, $\eta_2$ ont pour valeur par défaut un. Le paramètre MCBE est calculé pour un environnement donné auquel est associé un modèle d'atténuation. Le paramètre MCM est déterminé pour une QoS cible, typiquement un taux d'erreur binaire cible TEBc=$10^{-5}$. La métrique a donne bien une mesure d'une dégradation relative introduite par le support de transmission du signal de communication pour un environnement donné par rapport à un modèle de référence du support de transmission, puisque MCM correspond à la puissance supplémentaire nécessaire pour un canal multi trajets par rapport à un canal de référence Gaussien pour atteindre un même TEB et MCBE correspond à l'atténuation supplémentaire obtenue pour un modèle d'atténuation en espace obstrué par rapport à celle obtenue pour un modèle d'atténuation de référence en espace libre.

Ainsi, le procédé de sélection dispose d'autant de valeurs de la métrique α que de modes de transmission différents considérés Model...,ModeN, pour une distance d, un débit D et pour les scénarios de propagation considérés.

Le procédé de sélection effectue un ordonnancement 3 suivant les valeurs croissantes ou décroissantes de α pour sélectionner 4 au moins un mode de transmission. Le procédé sélectionne 4 les modes Modei pour lesquels la valeur de la métrique α est minimale avec une gamme de variation de 10%.

Selon un premier mode de réalisation particulier, pour le mode de transmission sélectionné ou les différents modes de transmission sélectionnés Modei, le procédé de sélection détermine 5 pour un mode de transmission sélectionné, la valeur d'une seconde métrique β qui mesure l'excédent de puissance non normalisée disponible à la distance d, c'est-à-dire la différence entre la puissance disponible et la puissance minimale requise : $\beta = Pa(d) - S_M$. La valeur de cette seconde métrique β varie notamment avec la contribution de bruit dans une bande de transmission donnée qui, lorsqu'elle augmente, nécessite une puissance à l'émission plus forte.

La puissance minimale $S_M$ requise pour assurer un débit de transmission D, pour un mode de transmission donné, lorsque le canal de propagation est à trajets multiples correspond au seuil de sensibilité multi trajets.

La puissance disponible $Pa(d)$ dépend de l'environnement considéré et de la puissance rayonnée PIRE à la sortie de l'antenne d'émission. $Pa(d)$ est donnée par :

$$Pa(d) = PIRE - PL_{MFS}(d) + Gr \qquad (dBm) \qquad\qquad (10)$$

avec Gr le gain de l'antenne de réception, PIRE la puissance rayonnée en sortie de l'antenne d'émission de l'entité émettrice donnée par l'expression :

$$PIRE = Pt + Gt \qquad\qquad (dBm) \qquad\qquad (11)$$

avec Pt la puissance en entrée d'antenne d'émission, Gt le gain de l'antenne d'émission.

La seconde métrique β peut donc s'exprimer selon la relation suivante :

$$\beta = PIRE + Gr - PL_{FS}(d) - \alpha - S \qquad\qquad (12)$$

La puissance disponible $Pa(d)$ doit être au moins égale à la puissance minimale $S_M$ requise pour établir la communication suivant un mode de transmission sélectionné sur la base de la première métrique $\alpha$ : $Pa(d) > S_M$ soit: $\beta > 0$

La première métrique $\alpha$ assure l'atteinte d'une certaine qualité, QoS cible, typiquement un taux d'erreur binaire cible TEBc=$10^{-5}$, pour la délivrance d'un débit D à la distance d et la seconde métrique β permet de contrôler que la puissance disponible à la distance d pour le mode sélectionné est bien suffisante.

Les modes de transmission sélectionnés sur la base de la première métrique a pour lesquels la seconde métrique β est inférieure à zéro sont écartés car ils n'assurent pas une puissance suffisante à la distance d.

Si plusieurs modes de transmission sont sélectionnés sur la base de la première métrique α alors le procédé de sélection choisit 6 un mode parmi ces modes sur la base de la seconde métrique β : le mode choisi MODE est celui pour lequel β est maximal entre deux valeurs βmin et βmax. βmin est égale à zéro plus éventuellement une marge de 2/3 dB et βmax est de l'ordre de 35 dB. La prise en compte de βmax est optionnelle et a pour but de limiter les puissances d'émission et d'améliorer la coexistence entre entités de communication présentes dans la même zone de couverture.

Selon une réalisation particulière illustrée par la figure 15, le procédé de sélection peut calculer les valeurs de la métrique $\alpha$ pour plusieurs valeurs de d, typiquement pour un intervalle : $d_{min} < d \leq d_{max}$. La valeur maximale dmax est un paramètre qui peut avoir une valeur par défaut en lien avec le scénario de déploiement considéré, par exemple de quelques dizaines de mètres pour le scénario WPAN. La valeur dmax peut être modifiée en fonction de l'entité de communication mettant en oeuvre le procédé de sélection et plus particulièrement des technologies de ses interfaces de transmission ou de sa localisation géographique lors de son installation sur site.

Selon cette réalisation, le procédé de sélection répète les étapes 2, 3, 4, 5 et 6 pour les valeurs de d qui varient entre dmin et dmax. A l'issue de cette répétition, le procédé a sélectionné un seul mode MODE$_j$ pour chaque valeur de distance d$_j$.

Lors de cette réalisation, le procédé peut estimer la gamme de variation de a, $\alpha_{j,min} \leq \alpha_j \leq \alpha_{j,max}$, pour les différents modes MODE$_j$ sélectionnés sur l'intervalle $d_{min} < d \leq d_{max}$ selon le déroulement suivant.

Un mode sélectionné MODE$_j$ peut être sélectionné pour plusieurs valeurs de d successives. Pour cette plage de la distance d, les valeurs de la métrique $\alpha$ pour le mode sélectionné MODE$_j$ peuvent varier entre deux valeurs : $\alpha_{j,min}$ et $\alpha_{j,max}$. Les valeurs $\alpha_{j,min}$ et $\alpha_{j,max}$ sont relatives aux points d'intersection entre les différents modes sélectionnés MODE$_j$. Pour un mode sélectionné MODE$_j$, la valeur $\alpha_{j,max}$ correspond au point d'intersection (maximum local) associé au mode le plus proche conformément à l'évolution de la distance émetteur récepteur ou bien à la valeur à l'origine en l'absence de point d'intersection, $\alpha_{j,max}$ est associé à une distance d$_1$. La valeur $\alpha_{j,min}$ correspond au point d'intersection (minimum local) associé au mode le plus proche conformément à l'évolution de la distance émetteur récepteur ou bien à la valeur à l'origine en l'absence de point d'intersection, $\alpha_{j,min}$ est associé à une distance d$_2$.

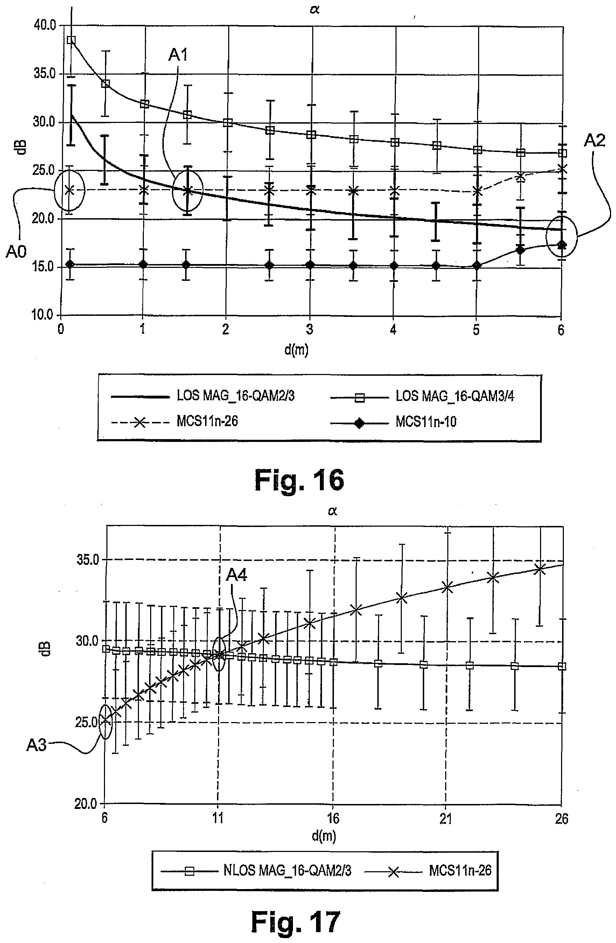

La figure 16 permet d'illustrer cette réalisation pour un scénario en visibilité. Pour une distance d inférieure à 1,5 m, le mode sélectionné $MODE_i$ est le mode $MCS_{11n}$-26 et les valeurs de $\alpha_{min}$ et $\alpha_{max}$ sont associées aux points A0(0,22.9) et A1(1.5,22.9) avec $\{\alpha_{min}=\alpha_{max}\}=\{22.9\}$. Au delà de cette distance, pour une distance variant entre 1,5 m et 6 m, le mode sélectionné $MODE_j$ est le mode LOS-MAG-16-QAM 2/3 et les valeurs de $\alpha_{min}$ et $\alpha_{max}$ correspondantes sont alors associées aux points A2(6,17.4) et A1 avec $\{\alpha_{min}, \alpha_{max}\}=\{17.4, 22.9\}$. Le mode MCS-11n-10 est supposé disponible pour une distance supérieure à 6 m.

La figure 17 est relative à des distances plus élevées qui engendrent une modification des scénarios de propagation et de la sélection des modes de transmission. Pour une distance d<12 m, le mode sélectionné MODEj est le mode MCS-11n 26. Les valeurs pour $\alpha_{min}$ et $\alpha_{max}$ sont associées aux points A3(6,25) et A4(11,,29.1) avec $\{\alpha_{min}, \alpha_{max}\}=\{25.0, 29.1\}$. Au delà de cette distance, le mode sélectionné MODEj est le mode MAG-NLOS-16-QAM 2/3.

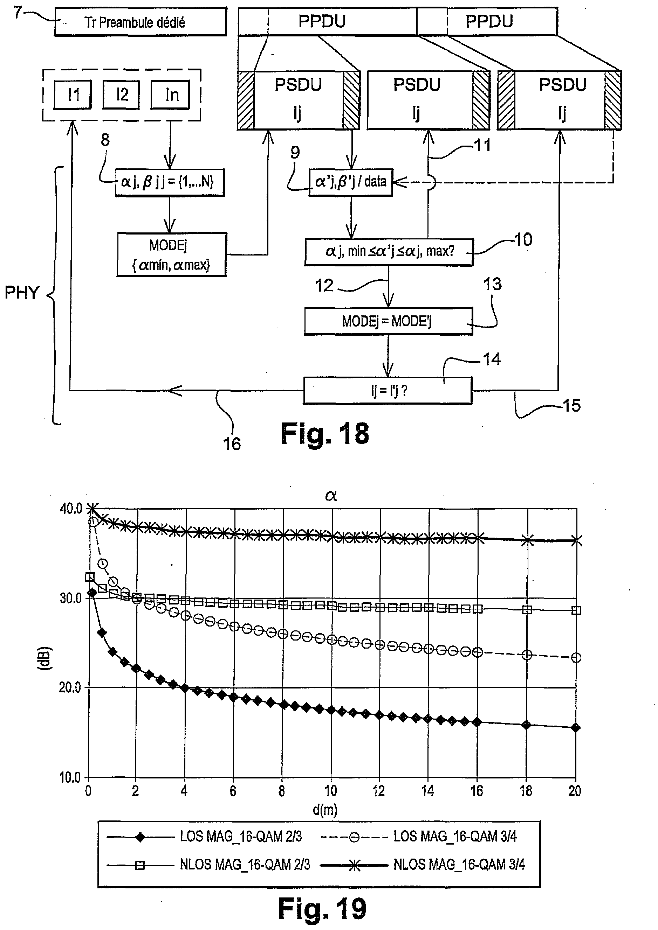

La mise en oeuvre d'un procédé de sélection selon l'invention est illustrée par la figure 18. Selon cette mise en oeuvre, le procédé de sélection comprend en outre une étape 7 d'émission d'une trame préambule dédiée. Cette trame préambule dédiée TR comprend des séquences dédiées à l'estimation des métriques $\alpha$ et $\beta$ pour au moins deux modes de transmission différents, les séquences dédiées contiennent des données connues de la réception. La trame préambule TR permet une estimation 8 des métriques $\alpha$ et $\beta$ suivant le procédé 1 illustré sur la figure 15. Cette trame dédiée est intégrée dans une couche inter-MAC équivalente à la couche UCL d'un système MAGNET, figure 2, qui encapsule différentes trames PPDU associées aux différentes interfaces $I_j$ de transmission elles-mêmes associées aux différents modes de transmission considérés. Cela permet de ne pas modifier les formats de trames PHY associés aux systèmes existants.

L'entité réceptrice de la trame dédiée estime les métriques $\alpha$ et $\beta$ à partir des séquences dédiées pour les différents modes de transmission considérés $MODE_j$ ce qui permet d'obtenir $\alpha_j, \beta_j$. L'entité réceptrice transmet à l'entité émettrice les différentes estimations des métriques $\alpha$ et $\beta$ selon des méthodes connues de l'homme du métier (en particulier, la transmission peut emprunter une voie dite de retour).

Selon un mode de mise en oeuvre, le procédé de sélection est dynamique.

Selon ce mode, le procédé de sélection effectue une mise à jour 9 des métriques $\alpha$ et $\beta$ à l'aide des données transmises par le signal de communication, ce qui permet d'obtenir $\alpha'_j, \beta'_j$.

Si 10 la métrique mise à jour $\alpha'_j$ est dans la gamme de variation $\alpha_{j,min} \leq \alpha_j \leq \alpha_{j,max}$ du mode sélectionné $MODE_j$ alors 11, en conformité avec la structure de trame PPDU de l'interface j correspondante au mode $MODE_j$, une nouvelle trame PSDU (ou trame PPDU en fonction des protocoles MAC) est injectée.

Si 10 la métrique mise à jour $\alpha'_j$ n'est plus dans la gamme de variation du mode j alors 12 une sélection 13 d'un nouveau mode est effectuée suivant le procédé 1 de sélection à l'aide des valeurs des métriques déduites de la précédente trame dédiée en utilisant la valeur du paramètre MCM précédemment calculé et mémorisé et en utilisant une actualisation du paramètre MCBE à l'aide des données data.

Si 14 le nouveau mode sélectionné $MODE_j$ correspond à la même interface $I_j$ alors 15, une trame PSDU ou une trame PPDU est injectée en conformité avec la trame de l'interface Ij.

Si 14 l'interface de transmission Ij est modifiée, alors 16 une réinjection de trame dédiée est effectuée et le procédé de mise en oeuvre est réitéré.

Ce mode de réalisation permet avantageusement d'effectuer une sélection quasi temps réel du mode de transmission le plus approprié.

En effet, dès que la valeur de la métrique mise à jour sur la base des données sort d'un intervalle donné $\alpha_{min} < \alpha < \alpha_{max}$ et si l'interface de transmission est modifiée alors le procédé de sélection déclenche l'émission d'une trame préambule dédiée effectuée en début de super-trame.

L'exemple qui suit est une illustration d'un mode réalisation d'un procédé de sélection selon l'invention dans le cas d'entités de communication compatibles d'un système MC-SS MAGNET avec la possibilité de sélectionner deux modes de transmission différents pour un débit D de l'ordre de 80Mbits/s. Le tableau B.1 en Annexe B fournit certaines caractéristiques d'un système MC-SS MAGNET. La figure 13 représente des modèles d'atténuation à 5GHz associés à ce système. Les deux modes de transmission sont respectivement le 16QAM 2/3 et le 16QAM ¾. Le paramètre MCBE présente les mêmes valeurs pour ces deux modes puisque les modèles d'atténuation considérés sont les mêmes.

La figure 19 donne pour chacun des deux modes, les valeurs de la première métrique $\alpha$ en fonction de la distance d pour les deux scénarios considérés LOS et NLOS.

Le procédé selon l'invention sélectionne le mode de transmission qui conduit à la plus petite valeur de la première métrique $\alpha$ pour une distance d émetteur-récepteur. Dans le cas d'un scénario de propagation en visibilité (LOS) ou en non-visibilité (NLOS), il s'agit du mode 16-QAM 2/3.

Le procédé selon l'invention calcule les valeurs de la seconde métrique $\beta$ pour le mode sélectionné 16-QAM 2/3 sur la base de la première métrique $\alpha$. Ces valeurs sont représentées sur la courbe de la figure 20. Cette courbe permet de constater que la condition $\beta>0$ est vérifiée pour toute la plage de distance d considérée.

L'exemple qui suit est une illustration d'un mode de réalisation d'un procédé de sélection selon l'invention dans le cas d'entités de communication compatibles d'un système IEEE802.11n avec la possibilité de sélectionner quatre modes de transmission différents pour un débit D de l'ordre de 80Mbits/s. Le tableau B.2 en Annexe B fournit certaines caractéristiques d'un système IEEE802.11n. La figure 13 représente des modèles d'atténuation à 5GHz associés à ce système IEEE802.11n.

Les quatre modes de transmission sont respectivement les $MCS_{11n}10$, $MCS_{11n}4$, $MCS_{11n}4$-STBC et $MCS_{11n}26$ qui correspondent respectivement à une modulation QPSK ¾, 16QAM ¾, 16QAM ¾ et QPSK ¾. Le paramètre MCBE présente les mêmes valeurs pour ces quatre modes puisque le modèle d'atténuation PLB(d) considéré est le même.

La figure 21 donne pour chacun des quatre modes, les valeurs de la première métrique $\alpha$ en fonction de la distance d.

Selon une première réalisation, le procédé selon l'invention sélectionne le mode de transmission qui conduit à la plus petite valeur de la première métrique $\alpha$ pour une distance d émetteur-récepteur : il s'agit du mode $MCS_{11n}$ 4-STBC.

Selon une autre réalisation, le procédé selon l'invention sélectionne les modes de transmission pour lesquels la valeur de la première métrique $\alpha$ est inférieure à un certain seuil, par exemple 25dB. Dans ce cas, les quatre modes $MCS_{11n}10$, $MCS_{11n}4$, $MCS_{11n}4$-STBC et $MCS_{11n}26$ sont sélectionnés pour une distance d inférieure à environ 6m. Pour la plage de distance d comprise entre 6m et 19m, les trois modes $MCS_{11n}10$, $MCS_{11n}4$ et $MCS_{11n}4$-STBC sont sélectionnés.

Le procédé de sélection selon l'invention calcule les valeurs de la seconde métrique $\beta$ pour le mode sélectionné $MCS_{11n}$ 4-STBC, pour les quatre modes sélectionnés ou pour les trois modes sélectionnés sur la base de la première métrique a.

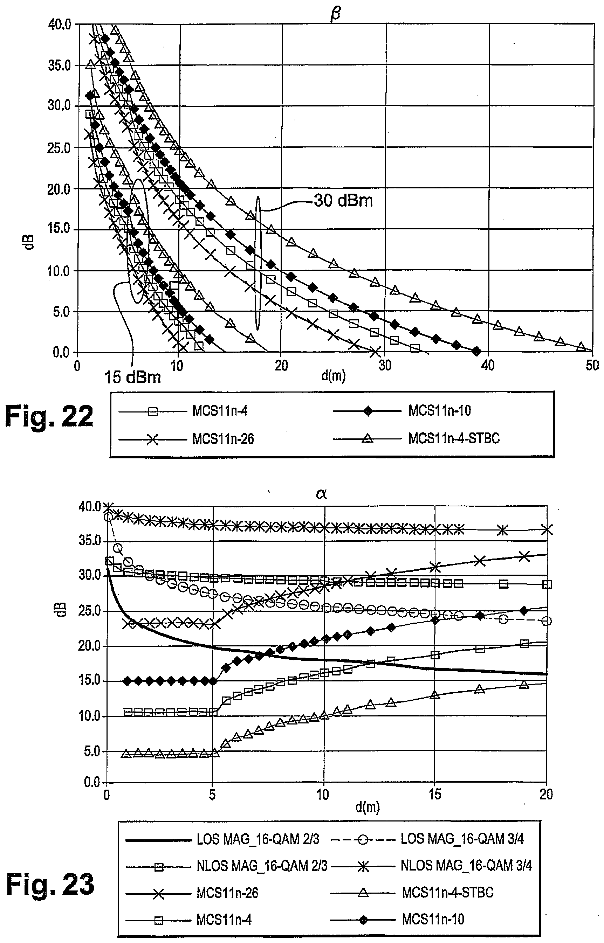

Les valeurs de la seconde métrique $\beta$ sont représentées sur la courbe de la figure 22 Cette courbe permet de constater que la condition $\beta>0$ n'est plus vérifiée pour certaines distances d au-delà de 10m en fonction des différents modes. Ceci signifie que la puissance disponible à cette distance est inférieure au seuil de sensibilité et que par conséquent si la distance entre les deux entités dépasse cette distance d alors l'entité réceptrice n'est plus dans la couverture de l'entité émettrice pour le mode considéré.

Selon la première réalisation, seul le mode $MCS_{11n}$ 4-STBC est sélectionné. La condition $\beta>0$ n'est plus vérifiée pour des distances d dépassant environ 20m pour une puissance rayonnée PIRE égale à 15dBm. En augmentant cette puissance rayonnée de 15dBm (PIRE=30dBm), ceci permet d'augmenter la puissance disponible à une distance d et par conséquent d'augmenter la portée de l'entité émettrice.

Selon l'autre réalisation, les quatre modes $MCS_{11n}10$, $MCS_{11n}4$, $MCS_{11n}4$-STBC et $MCS_{11n}26$ sont sélectionnés pour une distance d inférieure à environ 6m et pour la plage de distance d comprise entre 6m et 19m, les trois modes $MCS_{11n}10$, $MCS_{11n}4$ et $MCS_{11n}4$-STBC sont sélectionnés.

Pour une distance d inférieure à environ 10m, la condition $\beta>0$ est vérifiée pour les quatre modes $MCS_{11n}10$, $MCS_{11n}4$, $MCS_{11n}4$-STBC et $MCS_{11n}26$. Le procédé de sélection choisit de préférence le mode pour lequel $\beta_{min} \leq \beta \leq \beta_{max}$.

Pour la plage de distance d comprise entre 6m et 19m, la condition $\beta>0$ n'est plus vérifiée pour des distances d dépassant environ 15m, 14m et 19m respectivement pour les trois modes $MCS_{11n}10$, $MCS_{11n}4$ et $MCS_{11n}4$-STBC, pour une puissance rayonnée PIRE égale à 15dBm. Pour une distance d comprise dans cette plage, le procédé de sélection peut choisir le mode dit courant pour lequel $\beta_{min} \leq \beta \leq \beta_{max}$ et privilégier le mode pour lequel la valeur de $\beta$ est la plus petite. Le procédé de sélection peut éventuellement comparer le choix courant avec le choix effectué pour une distance d inférieure. Si les choix sont différents, le procédé de sélection peut prendre la décision d'augmenter la puissance rayonnée PIRE. Dans ce cas, le procédé de sélection doit revoir le choix courant en fonction des nouvelles valeurs de $\beta$ obtenues.

L'exemple qui suit est une illustration d'une mise en oeuvre d'un procédé de sélection selon l'invention dans le cas d'entités de communication compatibles d'un système IEEE802.11n et d'un système MC-SS MAGNET avec la possibilité de sélectionner six modes de transmission différents pour un débit D de l'ordre de 80Mbits/s :

- deux modes de transmission associés à l'interface de transmission MC-SS MAGNET qui sont respectivement le 16QAM 2/3 et le 16QAM ¾.
- quatre modes de transmission associés à l'interface de transmission IEEE802.11n qui sont respectivement les $MCS_{11n}10$, $MCS_{11n}4$, $MCS_{11n}4$-STBC et$MCS_{11n}26$.

La figure 23 représente les différentes valeurs de la première métrique $\alpha$ en fonction de la distance d pour ces différents modes, valeurs qui sont extraites des figures 19 et 21.

Selon une première réalisation, le procédé selon l'invention sélectionne le mode de transmission qui conduit à la plus petite valeur de la première métrique $\alpha$ pour une distance d émetteur-récepteur : il s'agit du mode $MCS_{11n}$ 4-STBC.

Annexe A

Tableau A.1

| Débit D | 20MHz | | | 40MHz | | |
|---|---|---|---|---|---|---|
| Rendement de codage | QPSK | 16QAM | 64QAM | QPSK | 16QAM | 64QAM |
| 1/2 | 1.8 Nc | 3.61 Nc | 5.41 Nc | 3.61 Nc | 7.22 Nc | 10.83 Nc |
| 2/3 | 2.41 Nc | 4.81 Nc | 7.22 Nc | 4.81 Ne | 9.62 Ne | 14.44 Nc |
| 3/4 | 2.71 Nc | 5.41 Ne | 8.12 Ne | 5.41 Nc | 10.83 Nc | 16.24 Nc |

Tableau A.2

| Paramètres | Modèles FranceTélécom ECMA-368 | | Modèles MAGNET à 5.2 GHz (PAN-FD) | | Modèles TG11n Canal B | |
|---|---|---|---|---|---|---|
| | LOS | NLOS | LOS | NLOS | LOS | NLOS |
| $d_0$ | 1 | 1 | 2.5 | 2.5 | 5 | 5 |
| $f_0$ | 3.939 GHz | 3.939 GHz | 5.2 | 5.2 | 5.2 | 5.2 |
| $PL(d_0, f_0)$ | 48.9 | 54.6 | 55.97 | 62.79 | 47.41 | 47.41 |
| $n$ | 1.62 | 3.22 | 1.34 | 1.85 | 3.5 | 3.5 |
| σ | 0 | 0 | 3.26 | 4.96 | 3 | 4 |

Annexe B

Tableau B.1

| | Système MC-SS Magnet, | | |
|---|---|---|---|
| | | | |
| Mode de transmission | 16-QAM 2/3 Nc/Lc=1 | 16-QAM ¾ Nc/Lc=1 | 64-QAM ½ Nc/Lc=1 |
| Débit Mb/s | 76.96 | 86.64 | 86.64 |
| Bande utile MHz | 30.156 | 30.156 | 30.156 |
| SNR dB | 27 | 35 | 27 |
| NF+L0 (dB) | 6.6+2.5 | 6.6+2.5 | 6.6+2.5 |
| S (dBm) | -76.04 | -75.32 | -75.78 |
| $S_M$ (dBm) (BRAN-A) | -59.04 | -50.52 | -58.52 |
| MCM (dB) | 17 | 24.8 | 17.26 |

Tableau B.2

| Système IEEE 802.11n | | | | |
|---|---|---|---|---|
| $MCS_{11n}$ | 10 | 4 | 4 | 26 |

(suite)

| Mode de transmission | QPSK ¾ Nss=2 40 MHz SDM (2,2,2) | 16-QAM ¾ Nss=1 40 MHz SISO(1,1,1) | 16-QAM ¾ Nss=1, 40 MHz STBC (1,2,2) | QPSK-3/4 Nss=4 20 MHz SDM(4,4,4) |
|---|---|---|---|---|
| Débit Mb/s | 81 | 81 | 81 | 78 |
| Bande (MHz) | 35.9 | 35.9 | 35.9 | 20 MHz |
| SNR (dB) | 20 | 21.5 | 16 | 27.5 |
| NF+L0 (dB) | 10+2.5 | 10+2.5 | 10+2.5 | 10+2.5 |
| S (dBm) | -78.88 | -71.92 | -71.92 | -82.05 |
| SM (dBm) Canal B | -65.94 | -62.94 | -69.94 | -61.44 |
| MCM (dB) | 12.86 | 8.96 | 1.96 | 20.61 |

Annexe C

Tableau C.1

| | BPSK 1/2 | QPSK 1/2 | QPSK 3/4 | 16-QAM 1/2 | 16-QAM 3/4 | 64-QAM 2/3 | 64-QAM 3/4 | 64-QAM 5/6 |
|---|---|---|---|---|---|---|---|---|
| $MCS_{11n}$ | 0 | 1 | 2 | 3 | 4 | 5 | 6 | 7 |
| **20 MHz, Nss=1, $N_{ES}=1$** | | | | | | | | |
| Débit | 6.5 | 13 | 19.5 | 26 | 39 | 52 | 58.5 | 65 |
| **40 MHz, Nss=1, $N_{ES}=1$** | | | | | | | | |
| Modulation | BPSK 1/2 | QPSK 1/2 | QPSK 3/4 | 16-QAM 1/2 | 16-QAM 3/4 | 64-QAM 02-mars | 64-QAM 3/4 | 64-QAM 5/6 |
| Débit utile Mbit/s | 13.5 | 27 | 40.5 | 54 | 81 | 108 | 121.5 | 135 |
| **20 MHz, Nss=2, $N_{ES}=1$** | | | | | | | | |
| Modulation | BPSK 1/2 | QPSK 1/2 | QPSK 3/4 | 16-QAM 1/2 | 16-QAM 3/4 | 64-QAM 2/3 | 64-QAM 3/4 | 64-QAM 5/6 |
| $MCS_{11n}$ | 8 | 9 | 10 | 11 | 12 | 13 | 14 | 15 |
| Débit utile Mbit/s | 13 | 26 | 39 | 52 | 78 | 104 | 117 | 130 |
| **40 MHz, Nss=2, $N_{ES}=1$** | | | | | | | | |
| Modulation | BPSK 1/2 | QPSK 1/2 | QPSK 3/4 | 16-QAM 1/2 | 16-QAM 3/4 | 64-QAM 02-mars | 64-QAM 3/4 | 64-QAM 5/6 |
| Débit utile Mbit/s | 27 | 54 | 81 | 108 | 162 | 216 | 243 | 270 |
| $MCS_{11n}$ | 24 | 25 | 26 | 27 | 28 | 29 | 30 | 31 |
| **20 MHz, Nss=4, $N_{ES}=1$** | | | | | | | | |
| Modulation | BPSK 1/2 | QPSK 1/2 | QPSK 3/4 | 16-QAM 1/2 | 16-QAM 3/4 | 64-QAM 2/3 | 64-QAM 3/4 | 64-QAM 5/6 |
| Débit utile Mbit/s | 26 | 52 | 78 | 104 | 156 | 208 | 234 | 260 |

(suite)

| 40 MHz, Nss=4, $N_{ES}$=1 | | | | | | | |
|---|---|---|---|---|---|---|---|
| **Modulation** | **BPSK** 1/2 | **QPSK** 1/2 | **QPSK** 3/4 | **16-QAM** 1/2 | **16-QAM** 3/4 | **64-QAM** 02-mars | **64-QAM** 3/4 | **64-QAM** 5/6 |
| **Débit utile Mbit/s** | 54 | 108 | 162 | 216 | 324 | 432 | 486 | 540 |

**Revendications**

1. Procédé (1) de sélection d'un mode de transmission, destiné à une première entité de télécommunication comprenant différents modes (Mode i=1 à N) de transmission d'un signal de communication destiné à une deuxième entité de télécommunication, les différents modes de transmission assurant un même débit D en bits/s, **caractérisé en ce qu'**il comprend :

   - une étape (2) de détermination pour un mode de transmission donné assurant le débit D de la valeur d'une première métrique $\alpha$ qui mesure une dégradation relative à une distance donnée d introduite par le support de transmission du signal de communication, résultat d'une dégradation relative liée à un effet multi trajets (MCM) au niveau lien par rapport à un canal gaussien et d'une dégradation relative liée à un effet d'atténuation du support de transmission (MCBE) par rapport à un modèle d'atténuation en espace libre, tel que l'effet multi trajets (MCM) est déterminé en effectuant la différence entre un seuil de sensibilité multi trajets du mode de transmission et un seuil de sensibilité du même mode de transmission, le seuil de sensibilité correspondant à une puissance minimale requise pour assurer le débit D avec un taux d'erreur binaire TEB cible représentatif d'une qualité de service QoS sur un support de transmission gaussien,
   - une étape (3) de comparaison des valeurs de la première métrique $\alpha$ pour différents modes assurant le même débit D pour sélectionner (4) au moins un mode de transmission (Modei).

2. Procédé (1) de sélection d'un mode de transmission selon la revendication 1 dans lequel la première métrique $\alpha$ est le résultat d'une somme pondérée d'une dégradation relative liée à l'effet multi trajets (MCM) et d'une dégradation relative liée à l'effet d'atténuation du support de transmission (MCBE).

3. Procédé (1) de sélection d'un mode de transmission selon la revendication 1, comprenant en outre pour les modes de transmission sélectionnés :

   - une étape (5) de détermination de la valeur d'une seconde métrique $\beta$ qui mesure l'excédent de puissance non normalisée disponible à la distance d, c'est-à-dire la différence entre la puissance disponible et la puissance minimale requise,
   - un choix (6) d'un mode de transmission (MODE, MODEj) pour lequel la seconde métrique $\beta$ franchit un seuil donné.

4. Procédé (1) de sélection d'un mode de transmission consistant à répéter pour différentes distance ($d_j$) un procédé de sélection selon la revendication précédente.

5. Procédé (1) de sélection d'un mode de transmission selon la revendication 3, dans lequel la seconde métrique $\beta$ est calculée selon la relation suivante : $\beta = Gr + PIRE - \alpha - S - PL_{FS}(d)$, dans laquelle PIRE est la puissance rayonnée en sortie de l'antenne d'émission de l'entité émettrice, Gr, est le gain de l'antenne en réception, S est la puissance minimale requise pour assurer le débit D avec une qualité de service QoS donnée pour un canal Gaussien, $PL_{FS}(d)$ est l'atténuation de propagation en espace libre.

6. Procédé (1) de sélection d'un mode de transmission selon l'une des revendications 1, 3 et 4 comprenant en outre une étape d'émission d'une trame préambule dédiée qui comprend des séquences dédiées à l'estimation de la première métrique $\alpha$ et/ou de la seconde métrique $\beta$ pour au moins deux modes de transmission différents.

7. Procédé (1) de sélection d'un mode de transmission selon l'une des revendications 3 et 4, comprenant en outre une mise à jour (9) de la valeur de la première et de la seconde métriques $\alpha$, $\beta$ à partir d'une estimation des métriques $\alpha$, $\beta$ effectuée à partir de données (champ PSDU) transmises par le signal de communication entre les deux entités.

8. Procédé (1) de sélection d'un mode de transmission selon la revendication précédente, un mode de transmission étant associé à une interface de transmission ($I_j$), comprenant en outre :

- un déclenchement d'une émission d'une trame préambule dédiée qui comprend des séquences dédiées à l'estimation de la première métrique $\alpha$ et/ou de la seconde métrique $\beta$ pour au moins deux interfaces de transmission du système dès que la valeur de la première métrique $\alpha$ mise à jour sort d'un intervalle donné ($\alpha_{min} < \alpha j < \alpha_{max}$) et que le mode sélectionné (MODEj) à partir de la seconde métrique $\beta$ mise à jour est associé à une interface de transmission distincte de celle associée au précédent mode sélectionné.

9. Entité de communication comprenant au moins deux modes (MODE, MODEj) de transmission différents assurant un même débit D en bits/s, **caractérisée en ce qu'**elle comprend :

- un module de détermination pour un mode de transmission donné assurant le débit D de la valeur d'une première métrique $\alpha$ qui mesure une dégradation relative à une distance donnée d introduite par le support de transmission du signal de communication, résultat d'une dégradation relative liée à un effet multi trajets (MCM) au niveau lien par rapport à un canal gaussien et d'une dégradation relative liée à un effet d'atténuation du support de transmission (MCBE) par rapport à un modèle d'atténuation en espace libre, tel que l'effet multi trajets (MCM) est déterminé en effectuant la différence entre un seuil de sensibilité multi trajets du mode de transmission et un seuil de sensibilité du même mode de transmission, le seuil de sensibilité correspondant à une puissance minimale requise pour assurer le débit D avec un taux d'erreur binaire TEB cible représentatif d'une qualité de service QoS sur un support de transmission gaussien,
- un module de comparaison des valeurs de la première métrique $\alpha$ pour différents modes assurant le même débit D pour sélectionner au moins un mode de transmission.

10. Entité de communication selon la revendication précédente comprenant plusieurs interfaces de transmission, les modes de transmission étant associés à une des interfaces de transmission, telle que les interfaces de transmission appartiennent à une liste comprenant :

- une interface de type courant porteur en ligne PLT (CPL),
- une interface de type transmission dans une bande de fréquence radio (RF),
- une interface de type optique.

11. Système de télécommunication comprenant une entité de communication selon la revendication 9.

12. Programme d'ordinateur sur un support d'informations, ledit programme comportant des instructions de programme adaptées à la mise en oeuvre d'un procédé de sélection d'un mode de transmission selon l'une quelconque des revendications 1 à 8, lorsque ledit programme est chargé et exécuté dans une entité de communication destinée à mettre en oeuvre un procédé de sélection d'un mode de transmission.

13. Support d'informations comportant des instructions de programme adaptées à la mise en oeuvre d'un procédé de sélection d'un mode de transmission selon l'une quelconque des revendications 1 à 8, lorsque ledit programme est chargé et exécuté dans une entité de communication destinée à mettre en oeuvre un procédé de sélection d'un mode de transmission.

**Patentansprüche**

1. Verfahren (1) zur Auswahl eines Übertragungsmodus, das für eine erste Telekommunikationseinheit bestimmt ist, umfassend verschiedene Modi (Modus i = 1 bis N) zur Übertragung eines Kommunikationssignals, das für eine zweite Telekommunikationseinheit bestimmt ist, wobei die verschiedenen Übertragungsmodi eine selbe Durchsatzmenge D an Bits/s gewährleisten, **dadurch gekennzeichnet, dass** es umfasst:

- einen Schritt (2) der Bestimmung für einen gegebenen Übertragungsmodus, der die Durchsatzmenge D gewährleistet, des Werts einer ersten Metrik a, die eine relative Verschlechterung bei einem gegebenen Abstand d, der vom Übertragungsträger des Kommunikationssignals eingeleitet wird, misst, Ergebnis einer relativen Verschlechterung, die mit einem Mehrwegeffekt (MCM) im Verbindungsbereich in Bezug zu einem Gauß'schen Kanal verbunden ist, und einer relativen Verschlechterung, die mit einem Dämpfungseffekt des Übertragungsträgers (MCBE) in Bezug auf ein Dämpfungsmodell im freien Raum verbunden ist, so dass der Mehrwegeffekt (MCM) bestimmt wird, indem die Differenz zwischen einem Mehrweg-Sensibilitätsgrenzwert des Übertragungsmodus und einem Sensibilitätsgrenzwert desselben Übertragungsmodus erstellt wird, wobei der Sensibilitätsgrenzwert einer erforderlichen Mindestleistung entspricht, um die Durchsatzmenge D mit einer binären Zielfehlerrate TEB zu gewährleisten, die für eine Dienstleistungsqualität QoS auf einem Gauß'schen Übertragungsträger repräsentativ ist,

- einen Schritt (3) des Vergleichs der Werte der ersten Metrik $\alpha$ für verschiedene Modi, die dieselbe Durchsatzmenge D gewährleisten, um mindestens einen Übertragungsmodus (Modei) auszuwählen (4).

2. Verfahren (1) zur Auswahl eines Übertragungsmodus nach Anspruch 1, bei dem die erste Metrik $\alpha$ das Ergebnis einer gewichteten Summe einer relativen Verschlechterung, die mit dem Mehrwegeffekt (MCM) verbunden ist, und einer relativen Verschlechterung, die mit dem Dämpfungseffekt des Übertragungsträgers (MCBE) verbunden ist, ist.

3. Verfahren (1) zur Auswahl eines Übertragungsmodus nach Anspruch 1, ferner umfassend für die ausgewählten Übertragungsmodi:

- einen Schritt (5) der Bestimmung des Werts einer zweiten Metrik $\beta$, die den nicht genormten Leistungsüberschuss, der beim Abstand d verfügbar ist, misst, d.h. die Differenz zwischen der verfügbaren Leistung und der erforderlichen Mindestleistung,
- eine Auswahl (6) eines Übertragungsmodus (MODE, MODEj), bei dem die zweite Metrik $\beta$ einen gegebenen Grenzwert überschreitet.

4. Verfahren (1) zur Auswahl eines Übertragungsmodus, darin bestehend, für verschiedene Abstände ($d_j$) ein Auswahlverfahren nach dem vorhergehenden Anspruch zu wiederholen.

5. Verfahren (1) zur Auswahl eines Übertragungsmodus nach Anspruch 3, bei dem die zweite Metrik $\beta$ nach folgendem Verhältnis berechnet wird: $\beta = Gr + PIRE - \alpha - S - PL_{FS}(d)$, wobei PIRE die ausgestrahlte Leistung am Ausgang der Sendeantenne der Sendeeinheit ist, Gr die Verstärkung der Antenne beim Empfang ist, S die erforderliche Mindestleistung ist, um die Durchsatzmenge D mit einer gegebenen Dienstleistungsqualität QoS für einen Gauß'sehen Kanal zugewährteisten, $PL_{FS}(d)$ die Ausbreitungsdämpfung im freien Raum ist.

6. Verfahren (1) zur Auswahl eines Übertragungsmodus nach einem der Ansprüche 1, 3 und 4, ferner umfassend einen Schritt des Sendens eines speziellen Präambel-Rahmens, der spezielle Sequenzen für die Schätzung der ersten Metrik $\alpha$ und/oder der zweiten Metrik $\beta$ für mindestens zwei verschiedene Übertragungsmodi umfasst.

7. Verfahren (1) zur Auswahl eines Übertragungsmodus nach einem der Ansprüche 3 und 4, ferner umfassend eine Aktualisierung (9) des Werts der ersten und der zweiten Metrik $\alpha$, $\beta$ auf Basis einer Schätzung der Metriken $\alpha$, $\beta$, die auf Basis von Daten (Feld PSDU) durchgeführt wurde, die von dem Kommunikationssignal zwischen den zwei Einheiten übertragen wurden.

8. Verfahren (1) zur Auswahl eines Übertragungsmodus nach dem vorhergehenden Anspruch, wobei ein Übertragungsmodus einer Übertragungsschnittstelle ($I_j$) zugeordnet ist, ferner umfassend:

- ein Auslösen eines Sendens eines speziellen Präambel-Rahmens, umfassend spezielle Sequenzen für die Schätzung der ersten Metrik $\alpha$ und/oder der zweiten Metrik $\beta$ für mindestens zwei Übertragungsschnittstellen des Systems, sobald der aktualisierte Wert der ersten Metrik $\alpha$ aus einem gegebenen Intervall ($\alpha_{min} < \alpha j < \alpha_{max}$) herausfällt, und der ausgewählte Modus (MODEj) auf Basis der aktualisierten zweiten Metrik $\beta$ einer anderen Übertragungsschnittstelle zugeordnet wird, als jener, die dem vorhergehenden ausgewählten Modus zugeordnet ist.

9. Kommunikationseinheit, umfassend mindestens zwei verschiedene Übertragungsmodi (MODE, MODEj), die eine selbe Durchsatzmenge D an Bits/s gewährleisten, **dadurch gekennzeichnet, dass** sie umfasst:

- ein Modul zur Bestimmung für einen gegebenen Übertragungsmodus, der die Durchsatzmenge D gewährleistet, des Werts einer ersten Metrik $\alpha$, die eine relative Verschlechterung bei einem gegebenen Abstand d, der vom Übertragungsträger des Kommunikationssignals eingeleitet wird, misst, Ergebnis einer relativen Verschlechterung, die mit einem Mehrwegeffekt (MCM) im Verbindungsbereich in Bezug zu einem Gauß'schen Kanal verbunden ist, und einer relativen Verschlechterung, die mit einem Dämpfungseffekt des Übertragungsträgers (MCBE) in Bezug auf ein Dämpfungsmodell im freien Raum verbunden ist, so dass der Mehrwegeffekt (MCM) bestimmt wird, indem die Differenz zwischen einem Mehrweg-Sensibilitätsgrenzwert des Übertragungsmodus und einem Sensibilitätsgrenzwert desselben Übertragungsmodus erstellt wird, wobei der Sensibilitätsgrenzwert einer erforderlichen Mindestleistung entspricht, um die Durchsatzmenge D mit einer binären Zielfehlerrate TEB zu gewährleisten, die für eine Dienstleistungsqualität QoS auf einem Gauß'schen Übertragungsträger repräsentativ ist,
- ein Modul zum Vergleich der Werte der ersten Metrik $\alpha$ für verschiedene Modi, die dieselbe Durchsatzmenge D gewährleisten, um mindestens einen Übertragungsmodus auszuwählen.

10. Kommunikationseinheit nach dem vorhergehenden Anspruch, umfassend mehrere Übertragungsschnittstellen, wobei die Übertragungsmodi einer der Übertragungsschnittstellen zugeordnet sind, so dass die Übertragungsschnittstellen einer Liste angehören, umfassend:

- eine Schnittstelle des Typs Online-Trägerstrom PLT (CPL),
- eine Schnittstelle des Typs Übertragung in einem Funkfrequenzband (RF),
- eine Schnittstelle optischen Typs.

11. Telekommunikationssystem, umfassend eine Kommunikationseinheit nach Anspruch 9.

12. Computerprogramm auf einem Informationsträger, wobei das Programm Programmanweisungen umfasst, die für den Einsatz eines Verfahrens zur Auswahl eines Übertragungsmodus nach einem der Ansprüche 1 bis 8 vorgesehen sind, wenn das Programm in eine Kommunikationseinheit geladen und von dieser ausgeführt wird, die dazu bestimmt ist, ein Verfahren zur Auswahl eines Übertragungsmodus einzusetzen.

13. Informationsträger, umfassend Programmanweisungen, die für den Einsatz eines Verfahrens zur Auswahl eines Übertragungsmodus nach einem der Ansprüche 1 bis 8 vorgesehen sind, wenn das Programm in eine Kommunikationseinheit geladen und von dieser ausgeführt wird, die dazu bestimmt ist, ein Verfahren zur Auswahl eines Übertragungsmodus einzusetzen.

**Claims**

1. Method (1) for selecting a transmission mode, intended for a first telecommunication entity comprising various modes (Mode i = 1 to N) for transmission of a communication signal intended for a second telecommunication entity, the various transmission modes ensuring the same throughput D in bits/s, **characterized in that** it comprises:

- a step (2) of determining, for a given transmission mode ensuring the throughput D, the value of a first metric $\alpha$ that measures a relative degradation, to a given distance d, introduced by the transmission medium of the communication signal, result of a relative degradation related to a link-level multipath effect (MCM) with respect to a Gaussian channel and of a relative degradation related to an attenuation effect (MCBE) of the transmission medium with respect to a free-space attenuation model, such that the multipath effect (MCM) is determined by taking the difference between a multipath sensitivity threshold of the transmission mode and a sensitivity threshold of the same transmission mode, the sensitivity threshold corresponding to a minimum power required to ensure the throughput D with a target binary error rate TEB representative of a quality of service QoS for a Gaussian transmission medium,
- a step (3) of comparing the values of the first metric $\alpha$ for various modes ensuring the same throughput D in order to select (4) at least one transmission mode (Modei).

2. Method (1) for selecting a transmission mode according to Claim 1, wherein the first metric $\alpha$ is the result of a weighted sum of a relative degradation related to the multipath effect (MCM) and of a relative degradation related to the attenuation effect of the transmission medium (MCBE).

3. Method (1) for selecting a transmission mode according to Claim 1, furthermore comprising, for the selected transmission modes:

- a step (5) of determining the value of a second metric $\beta$ that measures the non-normalized excess power available at the distance d, i.e. the difference between the available power and the required minimum power,
- a choice (6) of a transmission mode (MODE, MODEj) for which the second metric $\beta$ crosses a given threshold.

4. Method (1) for selecting a transmission mode consisting in repeating, for various distances ($d_j$), a selecting method according to preceding claim.

5. Method (1) for selecting a transmission mode according to Claim 3, wherein the second metric $\beta$ is calculated using the following relationship: $\beta = Gr + PIRE - \alpha - S - PL_{FS}(d)$, in which PIRE is the radiated power output from the emission antenna of the emitting entity, Gr, is the gain of the reception-side antenna, S is the minimum power required to ensure the throughput D with a given quality of service QoS for a Gaussian channel, $PL_{FS}(d)$ is the free-space propagation attenuation.

6. Method (1) for selecting a transmission mode according to one of Claims 1, 3 and 4 furthermore comprising a step of emitting a dedicated preamble frame that comprises sequences dedicated to the estimation of the first metric $\alpha$ and/or the second metric $\beta$ for at least two different transmission modes.

7. Method (1) for selecting a transmission mode according to one of Claims 3 and 4, furthermore comprising updating (9) the value of the first and second metrics $\alpha$, $\beta$ on the basis of an estimation of the metrics $\alpha$, $\beta$ carried out on the basis of data (PSDU field) transmitted by the communication signal between the two entities.

8. Method (1) for selecting a transmission mode according to the preceding claim, a transmission mode being associated with a transmission interface ($I_j$), furthermore comprising:

- triggering an emission of a dedicated preamble frame that comprises sequences dedicated to the estimation of the first metric $\alpha$ and/or of the second metric $\beta$ for at least two transmission interfaces of the system once the value of the updated first metric $\alpha$ departs from a given interval ($\alpha_{min} < \alpha j < \alpha_{max}$) and when the mode (MODE$_j$) selected on the basis of the updated second metric $\beta$ is associated with a transmission interface different from that associated with the precedingly selected mode.

9. Communication entity comprising at least two different transmission modes (MODE, MODEj) ensuring the same throughput D in bits/s, **characterized in that** it comprises:

- a module for determining, for a given transmission mode ensuring the throughput D, the value of a first metric $\alpha$ that measures a relative degradation, to a given distance d, introduced by the transmission medium of the communication signal, result of a relative degradation related to a link-level multipath effect (MCM) with respect to a Gaussian channel and of a relative degradation related to an attenuation effect (MCBE) of the transmission medium with respect to a free-space attenuation model, such that the multipath effect (MCM) is determined by taking the difference between a multipath sensitivity threshold of the transmission mode and a sensitivity threshold of the same transmission mode, the sensitivity threshold corresponding to a minimum power required to ensure the throughput D with a target binary error rate TEB representative of a quality of service QoS for a Gaussian transmission medium,
- a module for comparing the values of the first metric $\alpha$ for various modes ensuring the same throughput D in order to select at least one transmission mode.

10. Communication entity according to the preceding claim, comprising a plurality of transmission interfaces, the transmission modes being associated with one of the transmission interfaces, such that the transmission interfaces belong to a list comprising:

- an interface of the powerline-transmission (PLT) type,
- an interface of the transmission-in-a-band-of-radio-frequency (RF) type,
- an interface of optical type.

11. Telecommunication system comprising a communication entity according to Claim 9.

12. Computer program on a data medium, said program comprising program instructions suitable for implementing a method for selecting a transmission mode according to any one of Claims 1 to 8, when said program is loaded into and executed by a communication entity intended to implement a method for selecting a transmission mode.

13. Data medium comprising program instructions suitable for implementing a method for selecting a transmission mode according to any one of Claims 1 to 8, when said program is loaded into and executed by a communication entity intended to implement a method for selecting a transmission mode.

EP 2 517 365 B1

| Physical Layer PDU (PPDU) | | | |
|---|---|---|---|
| Preamble Sequenz | Start of Frame Delimiter | Physical Header | Physical Layer SDU (PSDU) |

| MAC Layer PDU (MPDU) | | | | |
|---|---|---|---|---|
| Frame Control Field | Seq. Nr. | Address Field | MAC Layer PDU (MPDU) | Frame Correction Sequence |

**Fig. 1**

| 3 bits | 5 bits | 12 bits | 2 bits | 2 bits | 2 bits | 1 bit | 1 bit | 3 bits | 1 bit | 8 bits |
|---|---|---|---|---|---|---|---|---|---|---|
| Reserved | RATE | LENGTH | Reserved | SCRAMBLER INIT | Reserved | BURST MODE | PREAMBLE TYPE | TX TFC | BAND GROUP LSB | Reserved |

5 Octets

| PHY Header | Tail Bits | MAC Header | HCS | Tail Bits | Reed-Salomon Parity Bits | Tail Bits |
|---|---|---|---|---|---|---|
| | 6 bits | 10 Octets | 2 Octets | 6 bits | 6 Octets | 4 bits |

| Frame Payload Variable Lenght 0-4095 Octets | TCS | Tail Bits | Pad Bits |
|---|---|---|---|
| | | 4 Octets | 6 bits |

| PLCP Preamble | PLCP Header | PSDU |
|---|---|---|

39,4 Mbits

53,3 Mbits, 80 Mbits, 106,7 Mbits, 200 Mbits, 320 Mbits, 400 Mbits, 480 Mbits

**Fig. 2**

24

| | |
|---|---|
| UCL | |
| MAC 802.15.3 | MAC 802.15.4 |
| MC-SS PHY | FM-UWB PHY |
| CH MAGNET PAN-FD | CH UWB |
| HDR | LDR |

I2

I1

**Fig. 3**

**Fig. 4**

**Fig. 5**

**Fig. 7**

Fig. 6

Fig. 8

**Fig. 9**

**Fig. 10**

Fig. 11

Fig. 12a

Fig. 12b

EP 2 517 365 B1

Fig. 13

**Fig. 14**

**Fig. 15**

**Fig. 16**

**Fig. 17**

**Fig. 18**

Légende :
◆ LOS MAG_16-QAM 2/3    ---⊖--- LOS MAG_16-QAM 3/4
□ NLOS MAG_16-QAM 2/3    ※ NLOS MAG_16-QAM 3/4

**Fig. 19**

**Fig. 20**

**Fig. 21**

**Fig. 22**

**Fig. 23**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- High Rate Ultra Wideband PHY and MAC Standard. Décembre 2008
- **SIAUD ; A.M. ULMER-MOLL.** Harmonized Multi-RF band UWB-OFDM air interfaces for WPAN applications. *MGWS'09 workshop,* Septembre 2009
- **PAGANI, P. ; PAJUSCO, P.** Statistical Modeling of the Ultra Wide Band Propagation Channel through the Analysis of Experimental Measurements. *Comptes Rendus Physique de l'Académie des Sciences,* Septembre 2006, vol. 7 (7), 762-773
- **V. ERCEG ; L. SHUMACHER ; P. KYRITSI ; A. MOLISH ; D.S BAUM et al.** TGn Channel Models. *IEEE P802.11, IEEE 802.11-03/940r,* 01 Novembre 2003